(19) **Europäisches Patentamt / European Patent Office / Office européen des brevets**

(11) **EP 2 664 788 B1**

(12) # EUROPEAN PATENT SPECIFICATION

(45) Date of publication and mention
of the grant of the patent:
**14.10.2015 Bulletin 2015/42**

(51) Int Cl.:
***F03B 13/20*** *(2006.01)*

(21) Application number: **13167403.8**

(22) Date of filing: **13.05.2013**

(54) **Device for producing energy by exploiting the energy of the sea waves**

Vorrichtung zur Energieerzeugung durch Nutzbarmachung der Energie von Meereswellen

Dispositif pour produire de l'énergie en exploitant l'énergie des vagues de la mer

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.05.2012 IT TO20120430**

(43) Date of publication of application:
**20.11.2013 Bulletin 2013/47**

(73) Proprietor: **Wave Trastic S.r.l.
14100 Asti (IT)**

(72) Inventor: **Cerruti, Giorgio
13040 Saluggia (VC) (IT)**

(74) Representative: **Rondano, Davide et al
Corso Emilia 8
10152 Torino (IT)**

(56) References cited:
**DE-A1-102009 006 702    DE-U1-202010 007 476
ES-A1- 2 324 082    FR-A- 540 385
FR-A1- 2 541 730    US-A- 3 204 110
US-A1- 2009 313 988**

## Description

The present invention relates to a device for producing energy exploiting the energy of the sea waves, i.e. a device for extracting energy from the sea waves and converting it into another kind of energy, in particular mechanical energy in the form of a unidirectional rotation of a rotating output member.

A device of the type identified above is known from documents FR 2 541 730 A1, US 2009/313988 A1, DE 20 2010 007476 U1, US 3 204 110 A and DE 10 2009 006702 A1. With reference in particular to document US2009/0313988, which contains the characteristics specified in the preamble of independent claim 1, it discloses a device for extracting energy from the sea waves comprising a system of piston pumps exploiting the relative oscillatory movement between a half-shell and a core in order to produce energy in the form of a fluid (water, oil, refrigerating liquid) under pressure. In order to allow exploiting such known device for electric power generation, it is necessary to convert the energy produced in the form of a fluid under pressure into mechanical energy, which inevitably involves a decrease in the efficiency of the system. Furthermore, possible leakages of the pressurized fluid may lead to the pollution of the sea water. Such drawbacks make not very advantageous and interesting the use of such a device for producing energy, in particular electric power, by exploiting the energy of the sea waves.

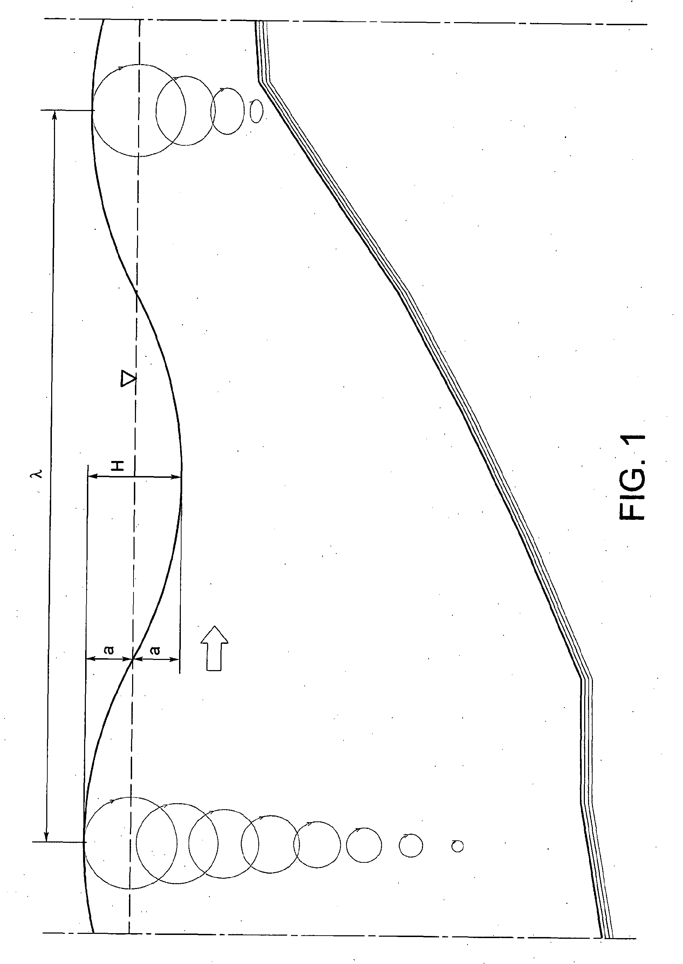

With reference to Figure 1 of the appended drawings, which provides a schematic representation of the physical magnitudes characterizing the sea waves, the energy transported by the sea waves is composed, as it is known, of potential energy and kinetic energy, where the potential energy component is due to the vertical displacement of the particles that are above or below the average reference level of the sea free surface in state of rest (hydrostatic thrust force overcoming the floating equilibrium, according to the Archimedes' principle), while the kinetic energy component is due to the sum of the motions of the individual particles of the liquid mass that, moving along circular or elliptical orbits, depending on the seabed depth at the relevant point being larger or smaller than half the wavelength, compose the longitudinal wave train. The total energy $E_T$ of a sea wave is equal to the sum of the potential energy Ep (vertical displacements) and the kinetic energy $E_c$ (longitudinal displacements).

The potential energy $E_p$, throughout a whole wavelength, is given by the expression

$$E_p = (\rho \cdot g \cdot a^2 \cdot \lambda)/4,$$

where $\rho$ is the fluid density, g is the acceleration of gravity, a is the wave width, i.e. the distance between the wave crest (or trough) and the sea free surface in a state of

rest, and $\lambda$ is the wavelength, i.e. the distance between two consecutive crests (or two consecutive troughs).

The kinetic energy $E_c$ is, at least theoretically, distributed between the wave surface profile and the seabed, considered as infinitely deep. Actually, about 50% of the kinetic energy of a sea wave is contained between the wave surface profile and a depth equal to the height H (where H = 2a) of the wave itself, while above 70% is contained between the wave surface profile and a depth equal to double the height H of the same wave. The kinetic energy of a sea wave up to a generic depth h (meant as the distance of the relevant point from the free surface in a state of rest) is given by the following expression:

$$E_c(h) = [\rho \cdot g \cdot a^2 \cdot (1 - e^n)] \cdot \lambda/4,$$

where $n = -(4 \cdot \pi \cdot h)/\lambda$.

If the entire wavelength and the entire water column comprised between the wave surface profile and the seabed are considered, the kinetic energy is:

$$E_c = (\rho \cdot g \cdot a^2 \cdot \lambda)/4.$$

Therefore, in a whole wave, the kinetic energy has the same value of the average potential energy. Since the total energy of the wave is the sum of the kinetic energy and the potential energy, it finally results that:

$$E_T = E_p + E_c = (\rho \cdot g \cdot a^2 \cdot \lambda)/2.$$

The object of the present invention is to provide a device for producing energy exploiting the energy of the sea waves, which is capable of extracting in a more efficient and clean manner the kinetic component of the total energy of the sea waves without requiring a mechanical connection with an external structure and that, subject to a connection with an external structure, is capable of extracting also the potential component of the total energy of the sea waves.

These and other objects are fully achieved according to the present invention by virtue of a device having the characteristics set forth in the appended independent claim 1.

Advantageous embodiments of the invention are defined in the dependent claims, the content of which is to be meant as an integral and integrating part of the following description.

In summary, the invention is based on the idea of providing a floating device comprising an outer half-shell and an inner core received within the half-shell, wherein the half-shell is connected to the core by means of a fulcrum which is located near the bottom of the half-shell and is configured to make the half-shell and the core drivingly connected with each other in the vertical translational movement and to allow relative oscillations of the half-shell relative to the core at least in a plane passing through the centre of the fulcrum, wherein the core is stabilized to allow the half-shell to oscillate relative to the core as a result of the kinetic component of the total energy of the sea waves, wherein the device further comprises first energy production means arranged to produce energy exploiting the alternating oscillatory movement of the half-shell relative to the core, said first energy production means comprising a motion conversion mechanism arranged to convert the alternating oscillatory movement of the half-shell relative to the core into a unidirectional rotary movement of a rotating output member, and wherein the motion conversion mechanism comprises a first sub-mechanism arranged to convert the alternating oscillatory movement of the half-shell relative to the core into an alternating rotary movement of at least one input member and a second sub-mechanism arranged to convert the alternating rotary movement of said at least one input member into a unidirectional rotary movement of the rotating output member.

By virtue of such a configuration, the alternating oscillatory movement of the half-shell relative to the core, mainly due to the kinetic component of the total energy of the waves, is exploited for producing mechanical energy in the form of a unidirectional rotation of the rotating output member, which mechanical energy can be used as such, both in situ and in remote (for example, on another structure located in the sea, be it a fixed or floating structure, or on another structure secured to the ground), or can be used for other purposes, particularly for the production of electric power, both in situ and in remote (for example, on another structure located in the sea, be it a fixed or floating structure, or on another structure secured to the ground).

Suitably connected to an external structure, which may be, for example, another device (of the same type of that according to the invention or of a different type) or a fixed external structure, anchored to the seabed or to the coast, the device according to the invention allows to exploit also the vertical movements, mainly produced by the potential component of the energy of the sea waves, of the assembly formed by the half-shell and by the core to produce mechanical energy to be used as such or for other purposes, particularly for the production of electric power.

Further characteristics and advantages of the present invention will be apparent from the following detailed description, given purely by way of non-limiting example, with reference to the appended drawings, in which:

> Figure 1 schematically shows the main characteristic physical magnitudes of a sea wave;
> Figure 2 is an axial sectional view of a device for producing energy exploiting the energy of the sea waves according to a preferred embodiment of the present invention;

Figures 3A to 3C are axial sectional views schematically showing the device of Figure 2, respectively in the position of equilibrium, in the position in which the half-shell is rotated to the left relative to the core, and in the position in which the half-shell is rotated to the right relative to the core;
Figure 4 is an axonometric view of a first example of a motion conversion mechanism of the device of Figure 2, and particularly of the system of arc-of-circumference-shaped guides being part of such mechanism;
Figure 5 illustrates an example of decomposition of a force acting on the half-shell of the device of Figure 2 with a motion conversion mechanism such as that of Figure 4;
Figure 6 is an axial sectional view showing a detail of the mechanism of Figure 4;
Figure 7 is a block diagram of a subset of the mechanism of Figure 4, having the function of converting the alternating rotary motion of a pair of gearwheels as rotating input members into a unidirectional rotary motion of a driven shaft as rotating output member;
Figure 8 is an axonometric view of a device for producing energy exploiting the energy of the sea waves according to a further preferred embodiment of the present invention;
Figure 9 is an axonometric view of a further example of motion conversion mechanism of the device according to the invention;
Figure 10 is an axonometric view of a variant of embodiment of the motion conversion mechanism of Figure 9;
Figures 11A and 11B show a first example of connection of the device according to the invention to a fixed external structure for exploiting the potential component of the total energy of the sea waves and refer to the case where the energy conversion sub-mechanisms are on board of the device and to the case where the energy conversion sub-mechanisms are on the fixed external structure, respectively;
Figure 12 shows a second example of connection of the device according to the invention to a fixed external structure for exploiting the potential component of the total energy of the sea waves, in the position in which the device is at the trough of a wave; and
Figures 13 to 15 show respective variants of embodiment of a device for extracting the mechanical energy from the sea waves according to the present invention, wherein the device can be used without a mechanical connection with the outside to exploit only the kinetic component of the total energy of the sea waves.

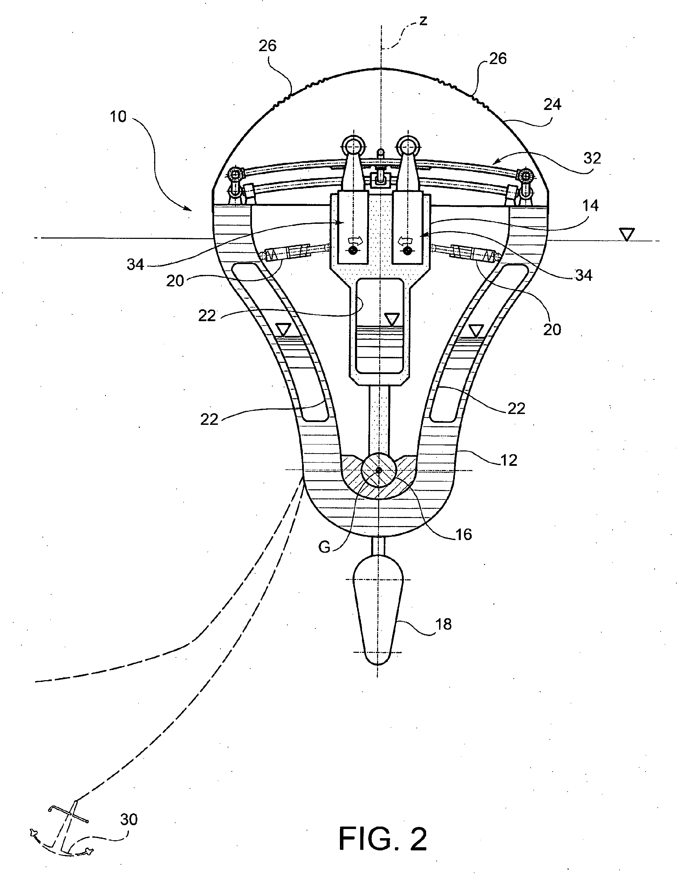

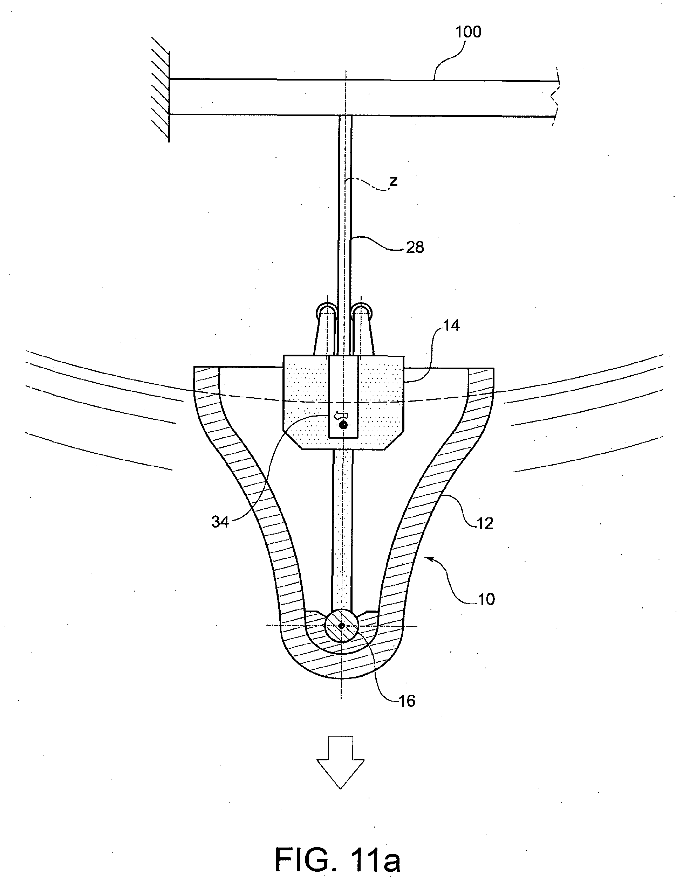

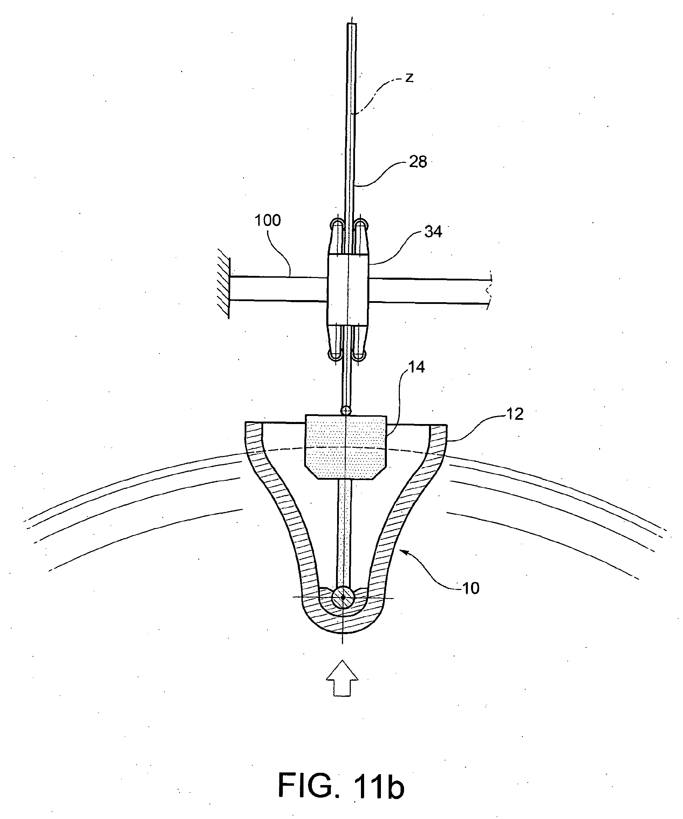

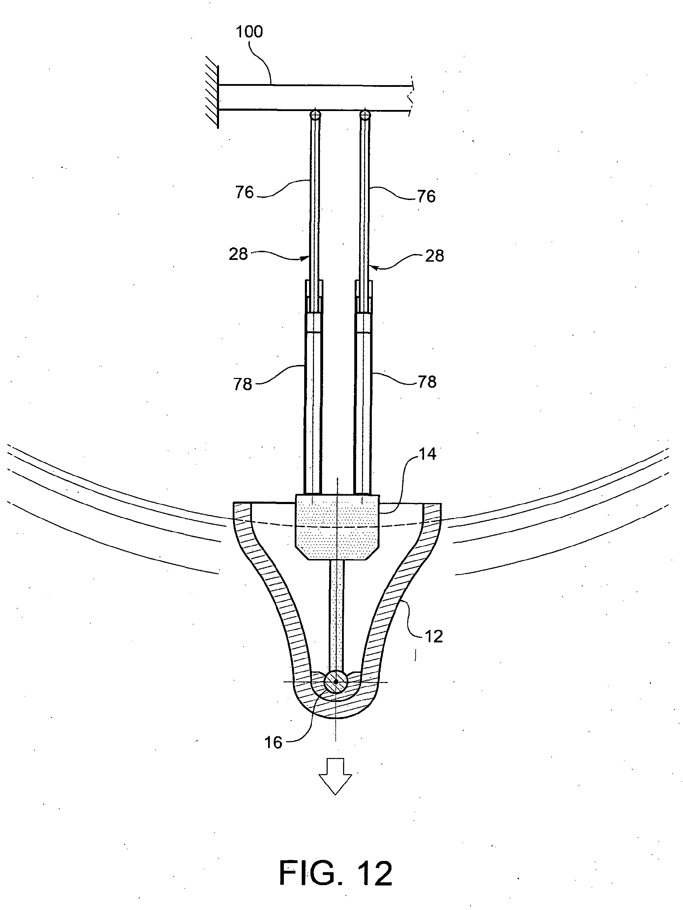

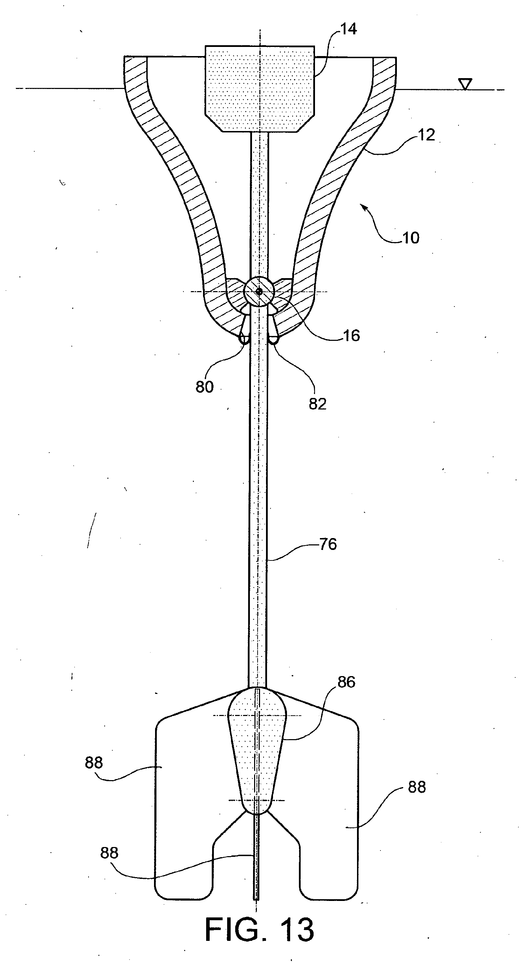

Referring initially to Figure 2, a device for producing energy exploiting the energy of the sea waves, i.e. a device for extracting energy from the sea waves and for converting it into another kind of energy, in particular into mechanical energy in the form of a unidirectional rotation of a rotating output member, according to a preferred embodiment of the present invention is generally indicated 10. The device 10 is made as a floating device and essentially comprises an outer half-shell 12 (referred to hereinafter, for the sake of simplicity, only as half-shell) and an inner core 14 (referred to hereinafter, for the sake of simplicity, only as core) received within the half-shell 12 and connected thereto by a fulcrum 16. The fulcrum 16 is configured so as to make the half-shell 12 and the core 14 drivingly connected with each other in the vertical translational movement and to allow relative oscillations of the half-shell 12 relative to the core 14 at least in a plane passing through the centre (indicated with G) of the fulcrum 16. On the one hand, therefore, the device 10 is capable of moving as a single body in the vertical direction, upwardly and downwardly, as a result of the potential component of the total energy of the sea waves and as a result of its own force weight. On the other hand, the half-shell 12 is capable of moving laterally, oscillating in a direction and the other one about the fulcrum 16 relative to the core 14 under the action of the horizontal thrusts due to the kinetic component of the total energy of the sea waves hitting the device 10. In other terms, the fulcrum 16 allows, on the one hand, to transfer the vertical thrusts from the half-shell 12 to the core 14 and allows, on the other hand, the half-shell 12 to oscillate relative to the core 14 in at least one plane passing through the centre G of the same fulcrum. The fulcrum 16 is advantageously located near the bottom of the half-shell 12. In order to allow to exploit the relative movement between the half-shell 12 and the core 14, this latter has to be stabilized, i.e. maintained in the position of equilibrium (or in any case near such position). Such need can be met both by a mechanical connection of the core 14 to an external structure, as shown by the examples of Figures 11A, 11B and 12, and without a connection to the outside, as shown by the examples of Figures 13 to 15.

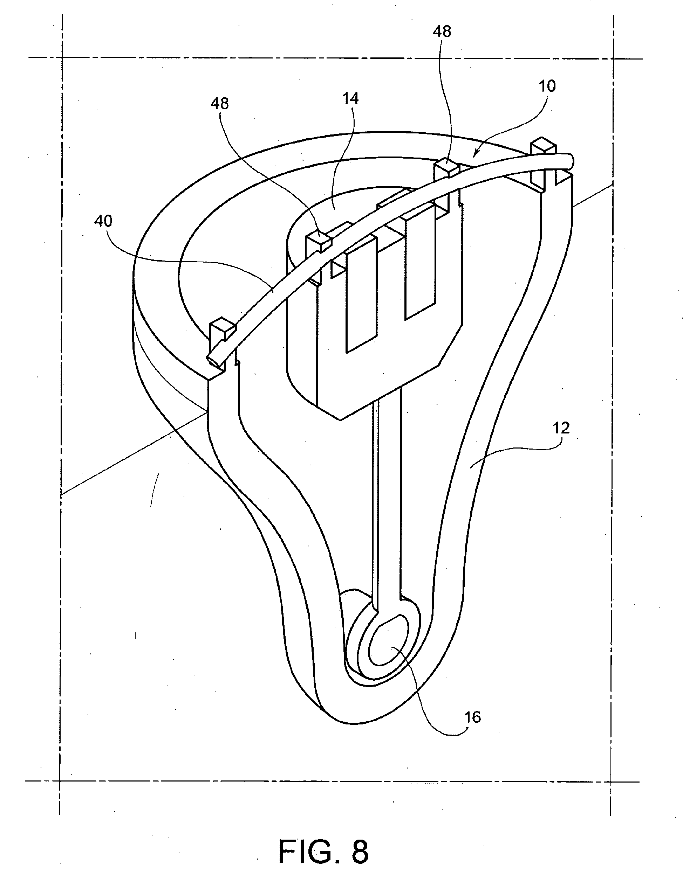

Preferably, the fulcrum 16 is made as a ball joint, in which case it allows the half-shell 12 to oscillate relative to the core 14 about the centre G in the infinite planes passing through such point. Alternatively, as shown in Figure 8, the fulcrum 16 is made as a simple hinge defining only one rotational horizontal axis, in which case it allows the half-shell 12 to oscillate relative to the core 14 about the centre G only in the plane perpendicular to such axis of rotation.

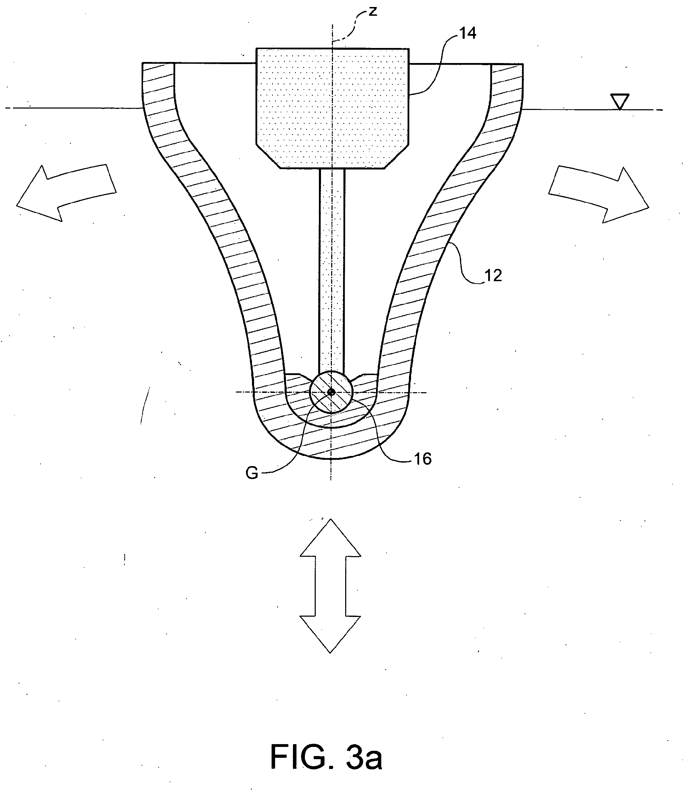

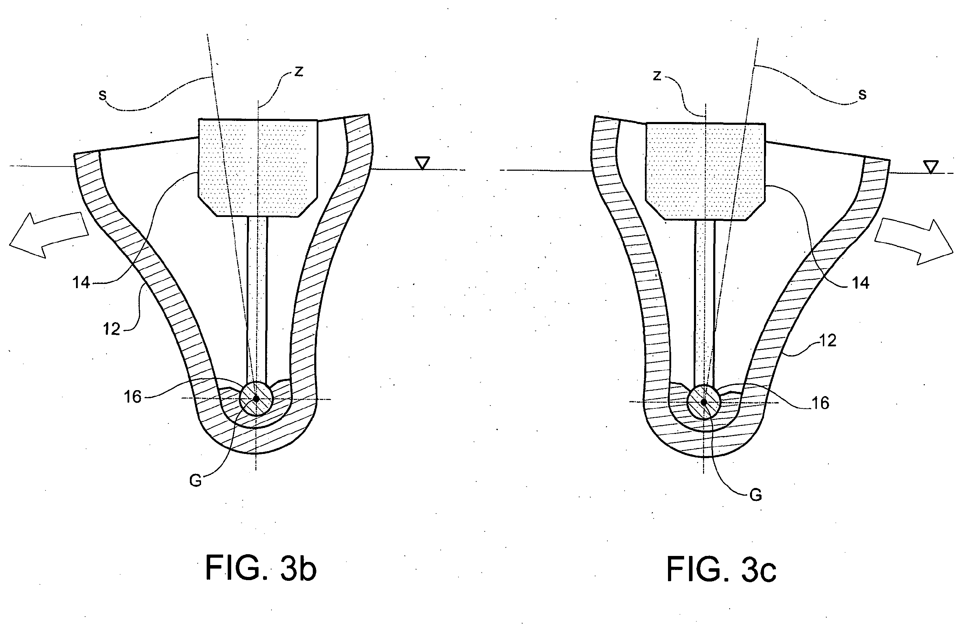

Figure 3A shows the device 10 in the position of equilibrium, in which the center of gravity of the half-shell 12 is located on the vertical axis (indicated z) passing through the centre G of the fulcrum 16, while Figures 3B and 3C show the device 10 in the position in which the half-shell 12 is rotated to the left relative to the core 14 and in the position in which the half-shell 12 is rotated to the right relative to the core 14, respectively.

Preferably, the half-shell 12 has an axial-symmetric configuration relative to an axis of symmetry s so as to allow, together with the use of a ball joint as a fulcrum 16, to exploit the kinetic energy of waves coming from all directions. Therefore, in this case, the half-shell 12 has a circular shape in each of the possible sections through section planes perpendicular to the axis of symmetry s. Referring again to Figures 3A to 3C, in the position of equilibrium of the device 10 the axis of symmetry s is aligned with the vertical axis z, while in the two positions shown in Figures 3B and 3C, the axis of symmetry s is rotated relative to the vertical axis z to the left and to the right, respectively.

Rather than having an axial-symmetric configuration, the half-shell 12 may be shaped so as to have in section an elongated shape, for example an elliptical shape, the axis s being in this case not an axis of symmetry, but the axis passing through the centre of the elliptical section. In this case, the fulcrum 16 will be preferably made as a hinge with an axis of rotation parallel to the main axis of the elliptical section (or of another elongated shape) of the half-shell 12 and the device 10 will be installed in such a manner that the axis of rotation of the fulcrum 16 is oriented perpendicular to the main direction of propagation of the waves at the point where the device is installed.

Preferably, the half-shell 12 is shaped as a reversed bell, so as to have a section with a larger area at the floating surface and a section with a smaller area on the side facing the seabed. Such a reversed bell configuration of the half-shell 12 allows to maximize the exploitation of both the kinetic component of the total energy of the sea waves, being such component at the maximum near the floating surface, and the potential component, being this one directly proportional to the floating surface occupied, i.e. to the area of the section of the device 10 through a section plane coinciding with the free floating surface in state of rest or equilibrium.

In order to maximize the exploitation of the lateral oscillations of the half-shell 12 produced by the kinetic component of the total energy of the sea waves and by the successive return of the half-shell back to the position of equilibrium, in conditions of equilibrium the center of gravity of the device 10 is placed on the vertical axis z, coinciding with the axis of symmetry s of the half-shell, as close to the fulcrum 16 as possible. Furthermore, the device 10 is configured in such a manner that its own center of gravity is always located underneath the thrust centre or centre of application of the hydrostatic thrust, coinciding with the center of gravity of the fluid mass displaced by the device itself. In order to promote this condition, the device 10 can be provided with one or more counterweights 18 or other concentrated masses arranged in suitable positions, for example in the portion of the half-shell 12 underneath the fulcrum 16. In this manner, the metacenter of the device 10, originated as a result of any lateral oscillation of the half-shell 12 relative to the core 14, will be always located above the center of gravity (therefore also above the fulcrum 16) and, consequently, as a result of any oscillation of the half-shell

12 relative to the core 14 about the fulcrum 16 a pair of forces will be generated, composed of the weight force of the device and the hydrostatic thrust acting thereon, which will tend to bring the device back to the position of equilibrium, i.e. to the condition of alignment of the axis s of the half-shell with the vertical axis z of the device 10.

Preferably, the half-shell 12 is further connected to the core 14 by means of a plurality of hydraulic or pneumatic dampers 20, which are arranged in the upper part of the device 10, therefore in particular above the fulcrum 16, and are used to limit the relative oscillatory movement between the half-shell and the core and thus to avoid damaging impacts between such components of the device 10. The dampers 20 extend in a substantially radial direction relative to the axis s of the half-shell 12. In the case where the fulcrum 16 is made as a ball joint, a minimum number of four dampers 20 is preferred, while in the case where the fulcrum is made as a hinge with only one axis two dampers may suffice.

Preferably, the device 10 further comprises a lid 24 that is secured to the upper part of the half-shell 12 so as to close this latter from the top. The lid 24 is made as an impermeable component, so as to protect the interior of the device 10 from the contact with the sea water. The lid 24 has openings 26 for watertight passage of connecting members 28 (Figures 11A, 11B and 12), made in particular as rigid connecting members, through which the core 14 is connected to an external structure, which may be, for example, a fixed external structure 100, be it secured to the seabed or to the coast. Such rigid connecting members will be configured so as to allow vertical displacements of the core 14, and therefore of the half-shell 12 drivingly connected for vertical translation therewith, produced by the potential component of the total energy of the waves, while limiting possible lateral oscillations of the core, so as to allow relative lateral oscillations, about the fulcrum 16, between the half-shell and the core, necessary to exploit the kinetic component of the total energy of the waves.

The device 10 may further be provided with a coupling member 30 that, without hindering the dynamic of the device, has the function of preventing the drift of the device itself, in addition to maintaining it, to some degree, close to the point where it has been installed.

According to the invention, the device 10 further comprises a motion conversion mechanism arranged to convert the alternating oscillatory movement of the half-shell 12 relative to the core 14 about the fulcrum 16, caused by the kinetic component of the total energy of the sea waves, into a unidirectional rotary movement of a rotating output member, such as a shaft (not shown).

The motion conversion mechanism comprises a first sub-mechanism 32 arranged to convert the alternating oscillatory movement of the half-shell 12 relative to the core 14 into an alternating rotary movement of a pair of rotating input members, such as, in particular, gearwheels, and a second sub-mechanism 34 arranged to convert the alternating rotary movement of these pair of rotating input members into a unidirectional rotary movement of the rotating output member.

In the embodiment shown in Figure 2, the first sub-mechanism 32 is arranged to convert each of the two perpendicular components into which the alternating oscillatory movement of the half-shell 12 relative to the core 14 can be decomposed, into an alternating rotary movement of a respective pair of rotating input members and it is for this purpose made as a system of arc-of-circumference-shaped guides.

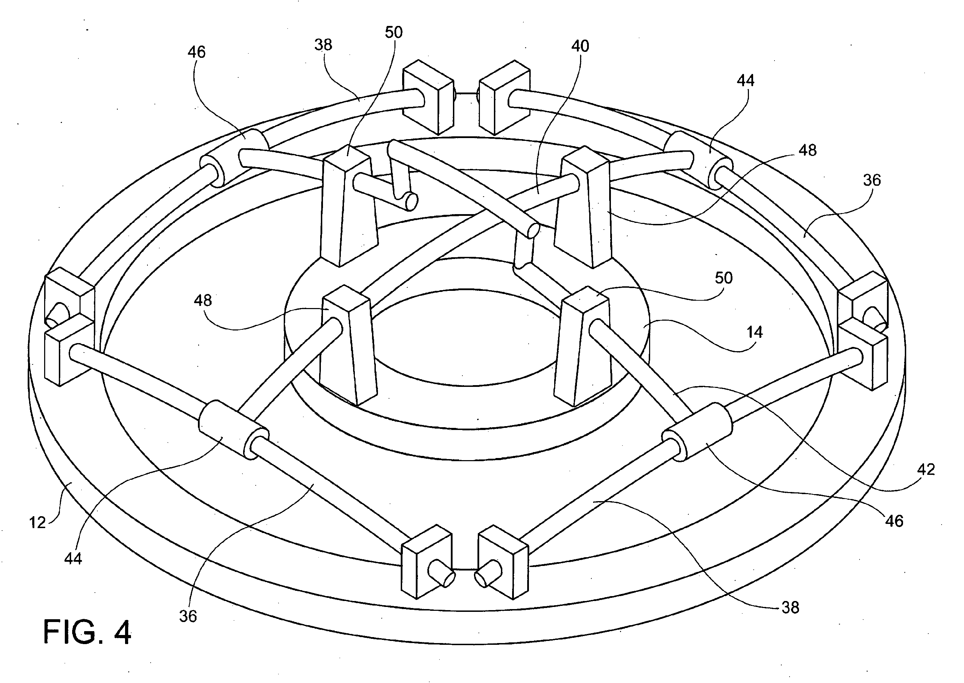

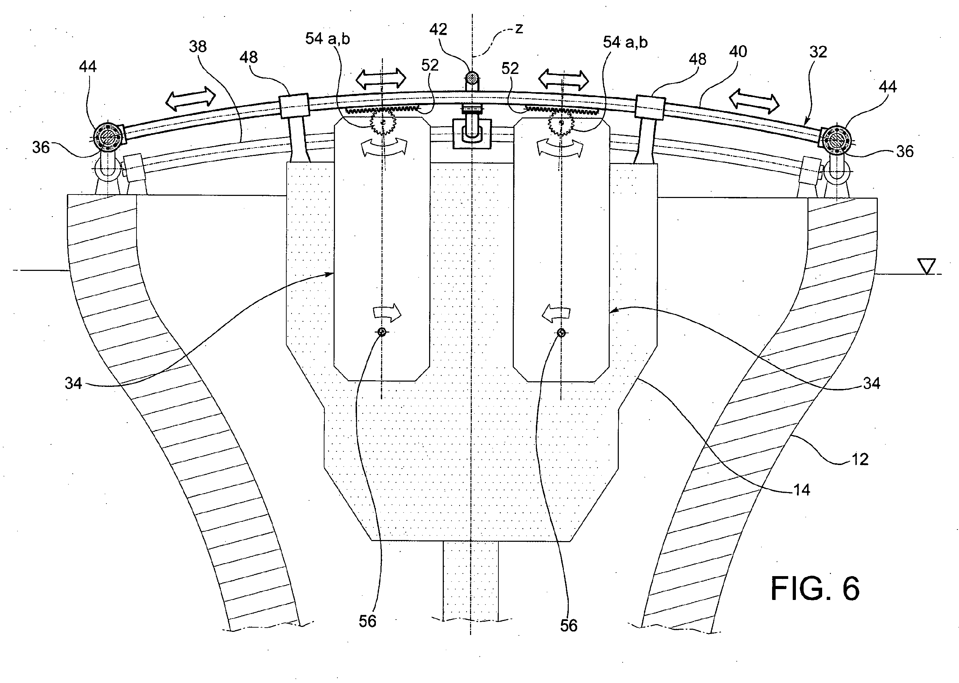

With reference also to Figures 4, 5 and 6, the first sub-mechanism 32 comprises in this case four arc-of-circumference-shaped guides 36, 38, each of which is secured at its ends to the half-shell 12, in particular to the upper part thereof. The arc-of-circumference-shaped guides 36, 38 are parallel two by two and in this connection one pair of parallel guides is indicated 36 while the other pair of parallel guides is indicated 38. The arc-of-circumference-shaped guides 36 are placed at the same distance from a first plane passing through the centre G of the fulcrum 16 and through the axis s of the half-shell 12 (plane perpendicular to the plane of the drawing of Figure 6), while the arc-of-circumference-shaped guides 38 are placed at the same distance from a second plane passing through the centre G of the fulcrum 16 and through the axis s of the half-shell 12 and perpendicular to the first one (plane coincident with the plane of the drawing of Figure 6). The axes of the arc-of-circumference-shaped guides 36, 38 are curvilinear axes in the shape of an arc of circumference defined by the intersection between a sphere, the centre of which coincides with the centre G, and a pair of parallel planes, which are placed at the same distance from a vertical plane passing through the centre of the above-mentioned sphere. The axes of the arc-of-circumference-shaped guides 36, 38 have a radius larger than the maximum depth of the centre of the fulcrum, i.e. larger than the maximum distance of the centre of the fulcrum from the free surface of the sea in state of rest. Furthermore, the axes of the arc-of-circumference-shaped guides 36, 38 extend, in the plane view, along the sides of a square, or more generally along the sides of a rectangle, which in the condition of equilibrium or rest of the device 10 lies in a horizontal plane.

The arc-of-circumference-shaped guides 36, 38 may have a solid or hollow cross-section of circular or polygonal (regular or irregular) shape. In the example of embodiment shown in Figures 4, 5 and 6, the arc-of-circumference-shaped guides 36, 38 have a solid cross-section of circular shape.

The first sub-mechanism 32 further comprises a pair of guided elements 40, 42 each having a curvilinear axis in the shape of an arc of circumference having its centre coinciding with the centre G of the fulcrum 16 and its radius preferably equal to that of the sphere on which the axes of the arc-of-circumference-shaped guides 36, 38 are placed. The curvilinear axis of the guided element 40 extends parallel to the curvilinear axes of the arc-of-circumference-shaped guides 38, while the curvilinear axis of the guided element 42 extends parallel to the curvilinear axes of the arc-of-circumference-shaped guides 36, hence perpendicular to the curvilinear axis of the guided element 40. The guided element 40 is guided along the arc-of-circumference-shaped guides 36, for example by means of a pair of guide sleeves 44 that are secured to the ends of such element and are slidably mounted each along a respective arc-of-circumference-shaped guide 36. Likewise, the guided element 42 is guided along the arc-of-circumference-shaped guides 38, for example, by means of a pair of guide sleeves 46 that are secured to the ends of this element and are slidably mounted each along a respective arc-of-circumference-shaped guide 38. The guided elements 40, 42 are further axially slidable along a first pair of supports 48 and along a second pair of supports 50, respectively, the supports 48 and 50 being secured to the core 14 of the device 10 in such a manner that the curvilinear direction along which the guided elements 40, 42 slide remains fixed relative to the core.

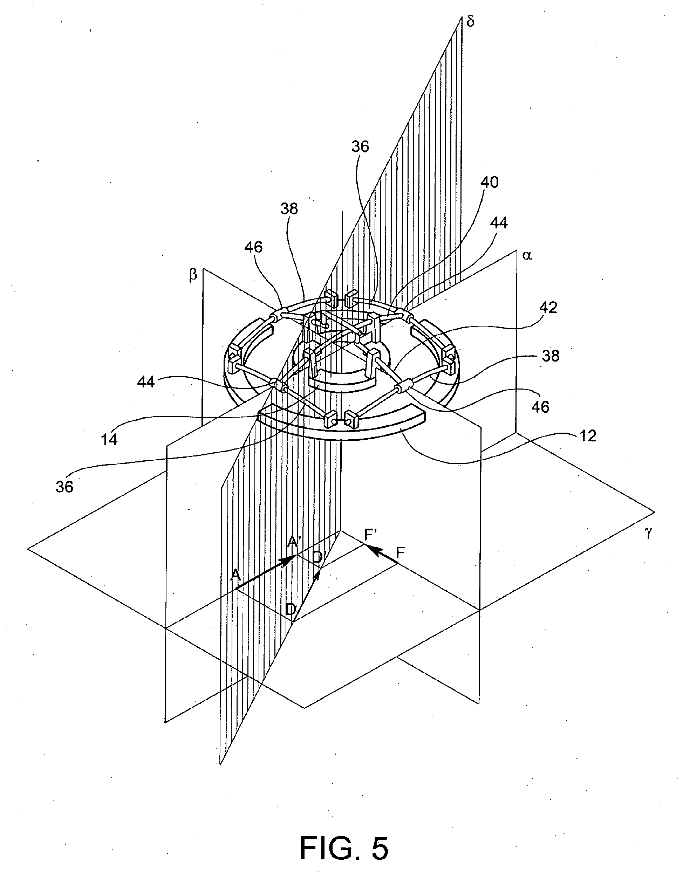

The first sub-mechanism 32 operates in the following manner. The arc-of-circumference-shaped guides 36, 38 move as a single body with the half-shell 12 in the oscillatory movement of the latter caused by the kinetic component of the total energy of the waves and transmit this movement to the guided elements 40, 42. If the oscillatory movement of the half-shell 12 occurs exclusively in a plane (indicated β in Figure 5) parallel to the planes in which the curvilinear axes of the arc-of-circumference-shaped guides 36 lie, the arc-of-circumference-shaped guides 38 transmit this movement, through the guide sleeves 46, to the guided element 42 (i.e. the guided element extending in the plane in which the oscillatory movement occurs). There is on the contrary no transmission of the movement to the guided element 40, but this latter will be free to slide, through its own guide sleeves 44, along the arc-of-circumference-shaped guides 36. If the oscillatory movement of the half-shell 12 occurs exclusively in a plane (indicated α in Figure 5) parallel to the planes in which the curvilinear axes of the arc-of-circumference-shaped guides 38 lie, the arc-of-circumference-shaped guides 36 transmit this movement, through the guide sleeves 44, to the guided element 40 (i.e. to the guided element extending in the plane in which the oscillatory movement occurs). There is on the contrary no transmission of the movement to the guided element 42, but this latter will be free to slide, through its own guide sleeves 46, along the arc-of-circumference-shaped guides 38. If the force acting on the half-shell 12 (indicated DD' in Figure 5), and therefore the oscillatory movement of the half-shell 12 relative to the core 14, lies in a plane (indicated δ in Figure 5) that is not parallel to the planes α and β defined above, this movement will have both a component in the plane α and a component in the plane β, and therefore it will be transmitted both to the guided element 40 and to the guided element 42. The system of arc-of-circumference-shaped guides described above, which in the device according to the invention is used as the first sub-mechanism of the motion conversion mechanism, allows therefore to decompose an oscillation of the half-shell 12 relative to the core 14, which occurs in the plane δ, into two oscillations in two perpendicular planes, namely in a first plane β parallel to that in which the axes of the arc-of-circumference-shaped guides 36 lie, and in a second plane α parallel to that in which the axes of the arc-of-circumference-shaped guides 38 lie. In the device according to the invention, the system of arc-of-circumference-shaped guides allows to decompose the force, which causes the oscillation in the plane δ, into two components laying in two perpendicular planes, and therefore allows to exploit both these components of the oscillation of the half-shell relative to the core in order to produce energy. The system of arc-of-circumference-shaped guides described above might in any case be associated to any other device or machine to decompose an oscillation of a first body relative to a second body into two oscillations occurring in first and second planes perpendicular to one another, wherein said first and second planes are perpendicular to a third plane, which is in turn perpendicular to the plane in which the oscillation of the first body relative to the second body occurs, and pass through the centre of oscillation of the first body relative to the second body. Therefore, a further object of the present invention is a motion decomposition mechanism arranged to decompose the alternating oscillatory movement of a first body relative to a second body in a given plane into two perpendicular oscillations, wherein the mechanism comprises a pair of first guides which are secured to the first body and extend along respective arcs of circumference defined by the intersection between a sphere and a first pair of parallel planes, which are placed at the same distance from a first vertical plane passing through the centre of the sphere, and a pair of second guides which are secured to the first body and extend along respective arcs of circumference defined by the intersection between the same sphere and a second pair of parallel planes, which are placed at the same distance from a second vertical plane passing through the centre of the sphere and perpendicular to the first plane, wherein the mechanism further comprises first and second guided elements, each having a curvilinear axis in the shape of an arc of circumference the centre of which coincides with the centre of the sphere and the radius of which is preferably equal to that of the sphere on which the axes of said first and second pairs of arc-of-circumference-shaped guides are placed, the first guided element being guided along the first guides and extending parallel to the second guides and the second guided element being guided along the second guides and extending parallel to the first guides, and wherein the mechanism further comprises at least one first support along which the first guided element is slidably guided and at least one second support along which the second guided element is slidably guided, the first and second supports being secured to the second body in such a manner that the curvilinear direction along which the first and second guided elements slide is fixed relative to the second body.

Referring now in particular to Figure 6, each guided element 40, 42 (in Figure 6 only the guided element 40 is wholly shown) is provided with at least one toothed arc or gearwheel sector 52 (in Figure 6 two toothed arcs 52 are shown, even though just one toothed arc may be provided for), which is arranged on the inner side of the guided element and permanently meshes with a pair of gearwheels 54a, 54b carried by the core 14 and acting as rotating input members of the second sub-mechanism 34. In this manner, the alternating oscillatory movement of each of the two guided elements 40, 42 resulting from the oscillatory movement of the half-shell 12 caused by the kinetic component of the total energy of the sea waves is converted into an alternating rotary movement of the respective pair of gearwheels 54a, 54b.

As stated before, the second sub-mechanism 34 is arranged to convert the alternating rotary movement of two rotating input members into a unidirectional rotary movement of a rotating output member. According to the embodiment shown in Figures 2, 4, 5 and 6, the first sub-mechanism 32 comprises, for each of the two directions in which the oscillatory movement of the half-shell 12 relative to the core 14 is decomposed by the arc-of-circumference-shaped guides 36, 38, two pairs of gearwheels 54a, 54b (in Figure 6 only the two pairs of gearwheels 54a, 54b associated to the direction of the axis of the guided element 40 are shown, while for sake of convenience those associated to the guided element 42 are not shown). In this embodiment, for each of the two directions into which the oscillatory movement of the half-shell 12 relative to the core 14 is decomposed by the arc-of-circumference-shaped guides 36, 38, two second sub-mechanisms 34 are therefore provided, one for each pair of gearwheels 54a, 54b. Alternatively, however, for each of the two directions into which the oscillatory movement of the half-shell 12 relative to the core 14 is decomposed by the arc-of-circumference-shaped guides 36, 38, only one pair of gearwheels 54a, 54b might be provided, and hence only one second sub-mechanism 34. As regards the rotating output member, it may be shared by all the second sub-mechanisms or, alternatively, two distinct rotating output members may be provided, one for the second sub-mechanism(s) associated to each of the two directions into which the oscillatory movement of the half-shell 12 relative to the core 14 is decomposed by the arc-of-circumference-shaped guides 36, 38. Therefore, in this manner, both the alternating rotary movement of one pair of gearwheels 54a, 54b, driven for example by the guided element 40 of the first sub-mechanism 32, and the alternating rotary movement of the other pair of gearwheels 54a, 54b, driven by the guided element 42 of the first sub-mechanism 32, will be converted by the respective second sub-mechanisms 34 into a unidirectional rotary movement of the rotating output member, which movement will may be exploited either directly as a rotational mechanical energy or for the production of another kind of energy, for example electric power (through an alternator, etc.), pneumatic or hydraulic energy (through a pump, a turbine, etc.). The energy obtained in this manner, irrespective of its form, may be indifferently used in situ or in remote. In this second case, it will be transferred outside the device 10 by suitable means, for example by electric cables for transporting the electric power produced on board of the device.

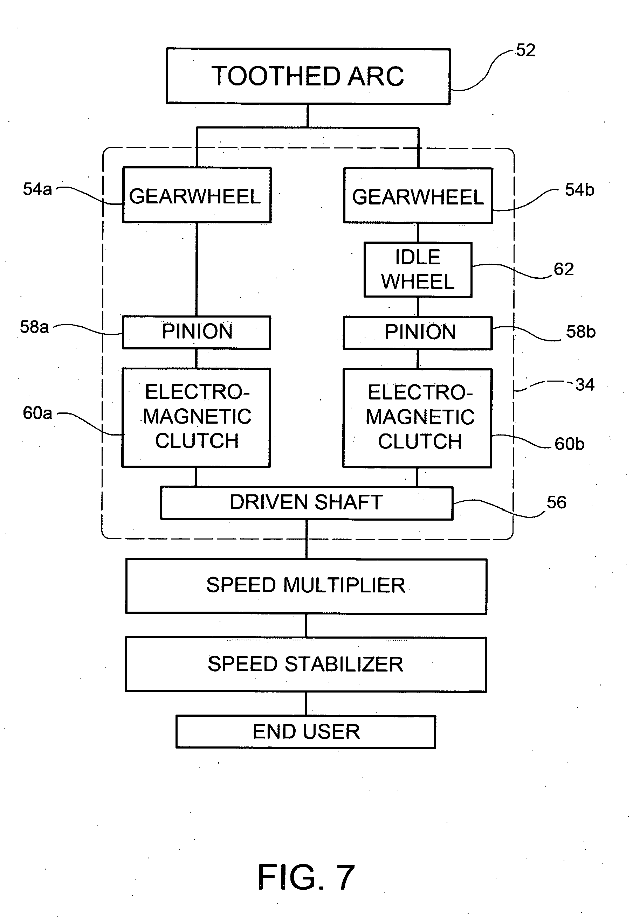

With reference to Figure 7, which shows in the form of a block diagram a possible example of embodiment of each of the second sub-mechanisms 34, this sub-mechanism comprises first of all the two gearwheels 54a, 54b as rotating input members, these gearwheels meshing with the toothed arc 52 and being therefore rotatable alternately in a direction and in the opposite one as a result of the alternating oscillatory movement of the half-shell 12 relative to the core 14. The second sub-mechanism 34 further comprises a driven shaft 56 as rotating output member and a pair of pinions 58a, 58b which can be coupled for rotation to the driven shaft 56 each by means of a respective electromagnetic clutch 60a, 60b, which can be indifferently made as a friction clutch or as a dog clutch. The gearwheel 54a meshes directly with the respective pinion 58a, while the gearwheel 54b meshes with the respective pinion 58b via an idle wheel 62 having the function of inverting the rotation direction of the pinion 58b relative to that of the pinion 58a. The two electromagnetic clutches 60a, 60b are controlled by a control device (for example, of the PLC or CNC type) depending on the direction of oscillation of the half-shell 12, and therefore of the direction of rotation of the gearwheels 54a, 54b. To this purpose, the device 10 advantageously comprises movement sensors, such as encoders, optical scales, micro switches, magnetic proximity sensors or the like, arranged to inform the control device about the direction of rotation of the gearwheels 54a, 54b and of the driven shaft 56 in order to allow the control device to suitably control the electromagnetic clutches 60a, 60b in such a manner that at most only one of the two pinions 58a, 58b is drivingly connected for rotation with the driven shaft 56.

Upstream of the pinions 58a, 58b, suitable speed multiplying devices (not shown) may be provided in order to decrease the transmitted torque and to increase the number of revolutions per minute of such pinions. Furthermore, between each pinion 58a, 58b and the respective electromagnetic clutch 60a, 60b a suitable flexible coupling device (not shown) may be provided. Furthermore, each electromagnetic clutch 60a, 60b is preferably connected to the driven shaft 56 via a free wheel (not shown) acting as a safety member capable of automatically disconnecting the respective clutch in case of malfunctioning of the same, in particular malfunctioning such as to cause rotations in a direction opposite to the expected or required one.

As stated before, in the example of embodiment of Figure 6 four second sub-mechanisms 34 are provided, two of which have, as rotating input members, the two pairs of gearwheels 54a, 54b meshing with the two toothed arcs 52 carried by the guided element 40 of the first sub-mechanism 32, while the other two second sub-mechanisms 34 have, as rotating input members, the two pairs of gearwheels (not shown) meshing with the two toothed arcs (also not shown) carried by the guided element 42 of the first sub-mechanism 32.

The device 10 may comprise, downstream of the driven shaft 56, one or more of the following units or members (not shown):

- a torque limiting coupling, having the function of protecting against possible overloads;
- a speed multiplier (of the epicyclic gear or multi-stage type), having the function of providing an output speed such as to maximize the efficiency of the end user (which will be, for example, an alternator, a hydraulic or pneumatic pump, etc.);
- a torque converter, having the function of transmitting to the best the speed transients, reducing the power/torque peaks and therefore ensuring a progressive transmission of the motion;
- a continuous speed variator, having the function of ensuring output speed and torque values that are optimal for the end user; and
- a flywheel, optionally a centrifugal mass fly-wheel (variable inertia), having the function of limiting efficiency losses during transients.

As shown in Figure 8, in which the same reference numbers haven been given to parts and elements identical or corresponding to those of Figure 4, in the case where the fulcrum 16 of the device 10 is made as a simple hinge with only one axis of rotation, and therefore the alternating oscillatory movement of the half-shell 12 relative to the core 14 occurs only in one plane, the motion conversion mechanism will be simpler than the one described above with reference to Figures 4, 5 and 6. In this case, in fact, the first sub-mechanism will not comprise anymore a system of arc-shaped guides to decompose the oscillatory movement in a plane into its components in a pair of perpendicular planes, but only an arc-shaped member 40 (corresponding to the guided member 40 of Figures 4, 5 and 6) secured directly to the half-shell 12 and extending in the oscillation plane of the same half-shell. The arc-shaped member 40 will also be provided with one or more toothed arcs for converting its own alternating oscillatory movement into an alternating rotary movement of a pair of gearwheels acting as rotating input members for the second sub-mechanism.

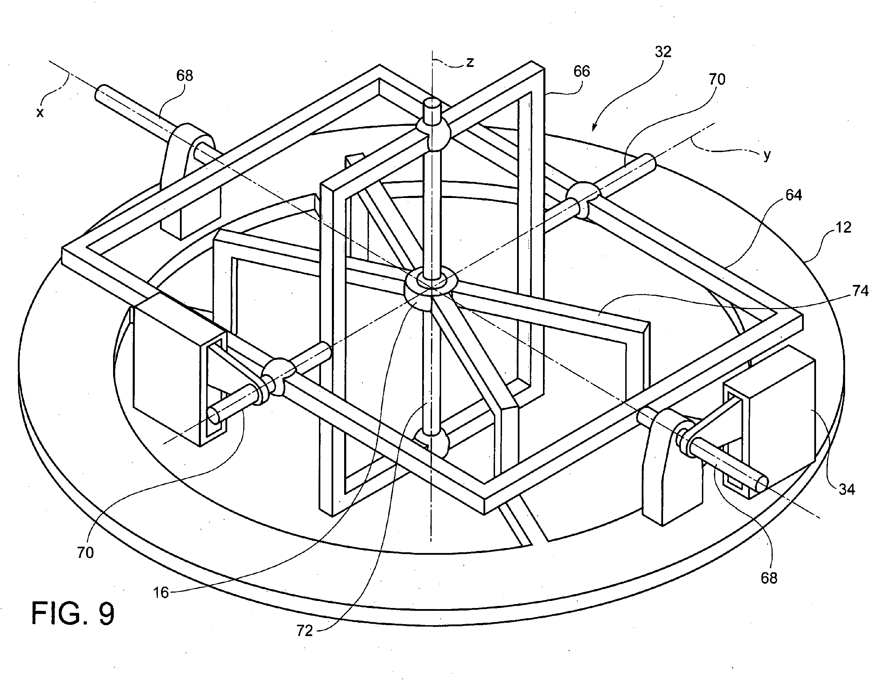

Referring now to Figure 9, according to a further example of embodiment of the invention the motion conversion mechanism, and more specifically the first sub-mechanism 32, is made as a system with oscillating frames. Unlike the embodiment of Figures 4, 5 and 6, the first sub-mechanism 32 is in this case arranged in the lower part of the device 10, rather than in the upper part, and essentially comprises a pair of oscillating frames 64, 66, namely an outer frame and an inner frame, respectively, which are arranged about the fulcrum 16 and have the respective centres coinciding with the centre G of the same fulcrum. The outer frame 64 is supported for rotation by the half-shell 12 by means of a pair of arms 68 aligned along an axis x passing through the centre G of the fulcrum 16 and is oriented perpendicular to the axis s of the half-shell, so as to be able to rotate relative to this latter about an axis of oscillation coinciding with said axis x. According to the embodiment proposed herein, the outer frame 64 preferably has a substantially rectangular configuration, with the two main sides oriented parallel to the axis x. Under rest or equilibrium conditions of the device 10, the outer frame 64 lies in the horizontal plane passing through the centre G of the fulcrum 16. The inner frame 66 is supported for rotation by the outer frame 64 by means of a pair of arms 70 aligned along an axis y passing through the centre G of the fulcrum 16, is oriented perpendicular to the axis x and lies in the plane of the outer frame 64, so as to be able to rotate relative to this latter about an axis of oscillation coinciding with the axis y. Furthermore, the inner frame 66 is connected to the core 14 so as to be drivingly connected therewith for translation along the vertical axis z. According to the embodiment proposed herein, also the inner frame 66 preferably has a substantially rectangular configuration, with the two main sides parallel to the axis z. Under rest or equilibrium conditions of the device 10, the inner frame 66 lies in a vertical plane passing through the centre G of the fulcrum 16. In the example of embodiment shown in Figure 9, the fulcrum 16 is made as a ball joint, the sphere of which is rigidly constrained to a shaft 72 secured to the core 14 and the outer body of which (defining a spherical seat for the above-mentioned sphere) is rigidly constrained to a fixed frame 74 secured to the half-shell 12.

The vertical movements of the half-shell 12 produced by the potential component of the total energy of the sea waves are transmitted from the half-shell to the core 14 via the fixed frame 74, the fulcrum 16 and the shaft 72. The half-shell 12 and the core 14 are therefore drivingly connected with each other for vertical translation. On the contrary, the half-shell 12 can oscillate relative to the core 14 in any of the infinite planes passing through the centre G of the fulcrum 16. In fact, the relative movement between the half-shell 12 and the core 14 occurs by virtue of the fact that the outer frame 64 is free to oscillate relative to the half-shell 12 through the two arms 68 (axis x), that the inner frame 66 is constrained relative to the core through the shaft 72 (axis z) and that the two frames are free to oscillate relative to one another through the two arms 70 (axis y). By virtue of the system of oscillating frames described above, the oscillations of the half-shell 12 relative to the core 14 are decomposed, irrespective of the plane in which they occur, into two components about the two axes x and y. The oscillation component about the axis x produces an alternating oscillation of the outer frame 64 relative to the half-shell 12, while the oscillation component about the axis y produces an alternating oscillation of the outer frame 64 relative to the inner frame 66. These two oscillations are exploited by means of respective sub-mechanisms 34 (shown only schematically in Figure 9), for example of the type described above with reference to Figure 7, for outputting a unidirectional rotary movement to be exploited directly, as mechanical rotational energy, or for the production of another energy form, for example, electric power (by an alternator, etc.), pneumatic or hydraulic energy (through a pump, a turbine, etc.). As stated before with reference to the system of arc-of-circumference-shaped guides, also the system of oscillating frames described above might be associated to any other device or machine to decompose an oscillation of a first body relative to a second body into two perpendicular oscillations. Therefore, a further object of the present invention is a motion decomposition mechanism arranged to decompose the alternating oscillatory movement of a first body relative to a second body about a fulcrum into two perpendicular oscillations, wherein the mechanism comprises a first frame, supported for rotation by the first body about a first axis passing through the centre of the fulcrum, and a second frame, supported on the one side by the first frame so as to be able to rotate relative to this latter about a second axis perpendicular to the first axis and passing through the centre of the fulcrum, and on the other side by the second body along a third axis passing through the centre of the fulcrum and perpendicular to the plane defined by the first and second axes, and wherein the first axis is constrained to the first body and the third axis is constrained to the second body.

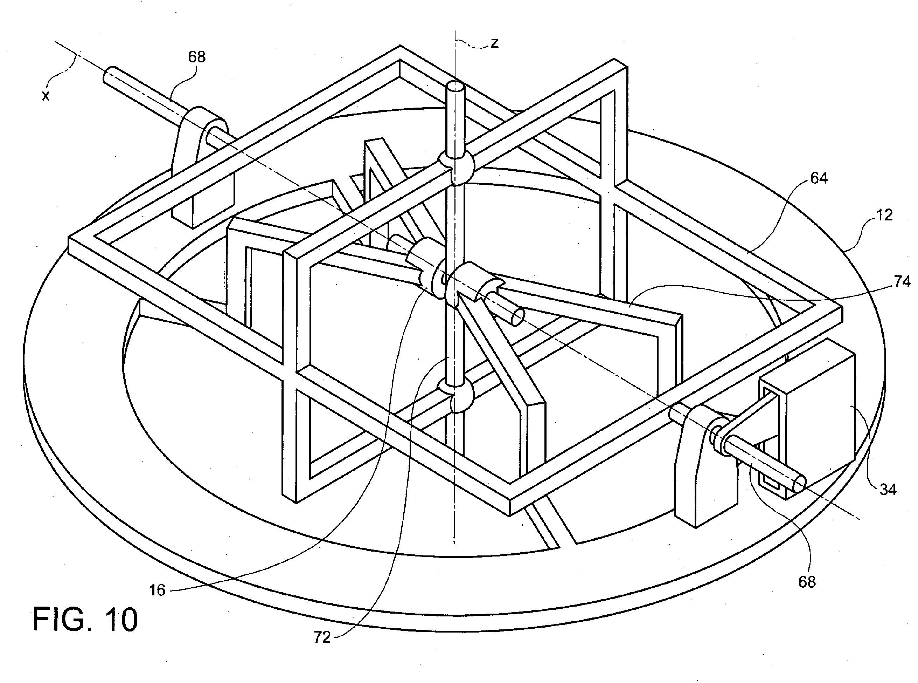

As shown in Figure 10, in which the same reference numbers have been given to parts and elements identical or corresponding to those of Figure 9, in the case where the fulcrum 16 of the device 10 is made as a simple hinge with only one axis of rotation, and therefore the alternating oscillatory movement of the half-shell 12 relative to the core 14 occurs only in one plane, the motion conversion mechanism will be simpler than the one described above with reference to Figure 9. In this case, in fact, the first sub-mechanism will not comprise anymore a system of oscillating frames to decompose the oscillatory movement in a plane into its components in a pair of perpendicular planes, but only an oscillating frame 64 supported for rotation by the half-shell 12 by means of a pair of arms 68 aligned along an axis x coinciding with the axis of rotation of the hinge 16.

In general terms, any mechanism or system capable of converting or transforming the kinetic component of the total energy of the sea waves, which is transmitted to the device according to the invention in the form of an alternated oscillatory movement of the half-shell relative to the core, into another kind of energy which can be used on board of the device or outside the same is to be considered as falling within the scope of the present invention.

As it will be described in detail here below, suitably connected by means of one or more connecting members to an external structure 100 secured to the seabed or to the coast, the device according to the invention is further capable of extracting the potential component of the total energy of the sea waves to convert it into another kind of energy which can be used on board of the device or outside it. The vertical oscillatory movements, having time-varying width, intensity and frequency, transmitted by the sea waves to the device 10, determine a displacement of the device to a vertical direction from the position of equilibrium relative to the free surface of the water in state of rest. Such vertical oscillatory movements of the device 10 relative to the external structure 100 can be exploited, through suitable mechanisms, for the extraction of the potential component of the total energy of the waves.

According to a configuration not shown in the drawings, the device 10 is also capable of extracting the potential component of the total energy of the sea waves to convert it into another kind of energy which can be used on board of the device or outside it, in the case where the device is suitably connected by means of one or more connecting members to a non-fixed external structure, which can be a similar device 10 or any other floating or non-floating device.

According to the example shown in Figures 11A and 11B, a rod 28 is used as connecting member, which is rigidly connected to the external structure 100 (as shown in Figure 11A) or to the core 14 of the device 10 (as shown in Figure 11B) and is free to slide vertically relative to the core 14 or the external structure 100, respectively. In this case, the alternating vertical movement of the rod 28 relative to the core 14 or the external structure 100 is converted, by means of a sub-mechanism 34 similar to that described above with reference to Figure 7 (with the difference that, in this case, the gearwheels 54a, 54b acting as rotating input members of the sub-mechanism mesh with a rack - not shown - drivingly connected to the rod 28, rather than with a toothed arc) installed on board of the external structure or of the core, into a unidirectional rotation having such an angular speed as to allow to exploit it for the expected uses.

According to the example shown in Figure 12, one or more linear (pneumatic or hydraulic) actuators are used as connecting members 28, preferably a pair of actuators, each comprising a stem 76 and a cylinder 78. The stem 76 of each actuator can be connected to the external structure 100 (in which case the cylinder 78 of the actuator will be connected to the core 14), as in the example of Figure 12, or to the core 14 (in which case the cylinder 78 of the actuator will be connected to the external structure 100). The connections between the stem 76 and the cylinder 78 of each actuator and the core 14 and the external structure 100, respectively, or vice versa, may be of a rigid type or of an articulated type (by means of a hinge with only one axis of rotation or by means of a ball joint). In this manner, the vertical movements of the device 10, and therefore of the core 14, relative to the external structure 100, will allow to generate and store pressurized fluid. The closed-loop (hydraulic or pneumatic) system to store the pressurized fluid may be located on board of the core 14 of the device 10, on board of the external structure 100 or part on board of the core 14 and part on board of the external structure 100. Also in this case, suitably installed movement sensors, such as encoders, optical scales, micro switches, magnetic proximity sensors or the like, will allow to inform computerized control devices, such as, for example, PLC and/or CNC, about the direction, intensity and frequency of the oscillation movements of the device 10 relative to the external structure 100 and, consequently, will allow the computerized control device to manage the flows of the closed-loop pneumatic or hydraulic system so as to generate and store the pressurized fluid. The pressurized fluid thus generated and stored may be used for a number of purposes, for example, to drive a rotary (hydraulic or pneumatic) motor in order to produce unidirectional mechanical rotational energy, to produce electric power by means of an alternator, to drive a turbine, to drive a compressor, to drive a linear generator, to be used in situ (for example, to supply a pump) or, again, to be transferred outside the device for a remote use.

In the examples described above with reference to Figures 11A, 11B and 12, the connection of the device 10 to an external structure, in this specific case to a fixed external structure 100, be it secured to the coast or to the seabed, allows not only to exploit also the potential component of the total energy of the sea waves, but also and most of all to stabilize the core 14 and hence to allow the half-shell 12 to oscillate relative to the core as a result of the action of the kinetic component of the total energy of the sea waves. In fact, if the core 14 tended to oscillate together with the half-shell 12, dragged by the latter, there would not be a relative oscillation between these two components and therefore the device 10 would not be able, or it would be able only to an extremely reduced extent, to produce energy. Anyhow, the device 10 may also be connected to a non-fixed external structure, such as, for example, another device 10 of the same type.

The stabilization of the core 14 can also be obtained without the need of a connection to an external structure, as shown in the examples of Figures 13 to 15 (in which the same reference numbers have been given to parts and elements identical or corresponding to those of the previous figures) described here below.

In the embodiment of Figure 13, the core 14 of the device 10 has a lower extension in the form of a stem 76, which extends downwards passing through a through opening 80 formed on the bottom of the half-shell 12 and provided with a sealing gasket 82, and is provided at its lower end with a counterweight 86. Preferably, the stem 76 is provided with a plurality of fins 88 (in the number of four, in the proposed example) having the function of dampening any oscillations of the core 14. Preferably, the counterweight 86 and the fins 88 are located at such a depth as not to be significantly affected by the waves, for example, at a depth higher than twice the height H of the wave. In this manner, when the device 10 is hit by a sea wave, the core 14 will tend to remain substantially stationary, under the stabilizing effect of the counterweight 86 and of the fins 88 (if any), and the half-shell 12 will be thus able to oscillate relative to the core.

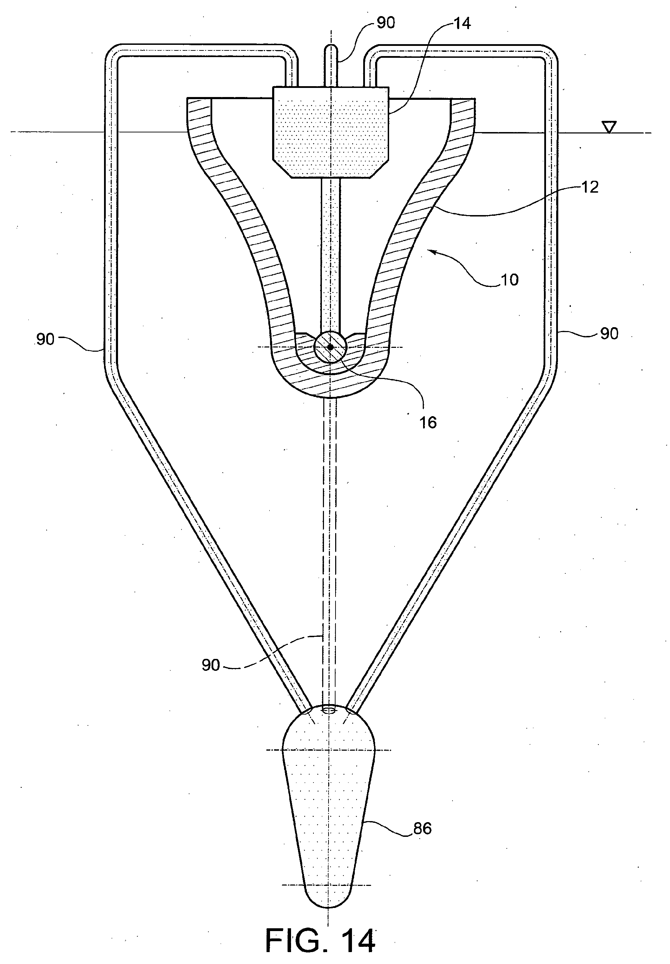

In the embodiment shown in Figure 14, the core 14 is connected to a counterweight 86 placed in the water underneath the device 10 by means of connecting arms 90 (in the number of four, in the proposed example) extending about the half-shell 12, without passing therethrough. Therefore, unlike the embodiment of Figure 13, there is no need of through openings, and of associated sealing gaskets, in the half-shell 12.

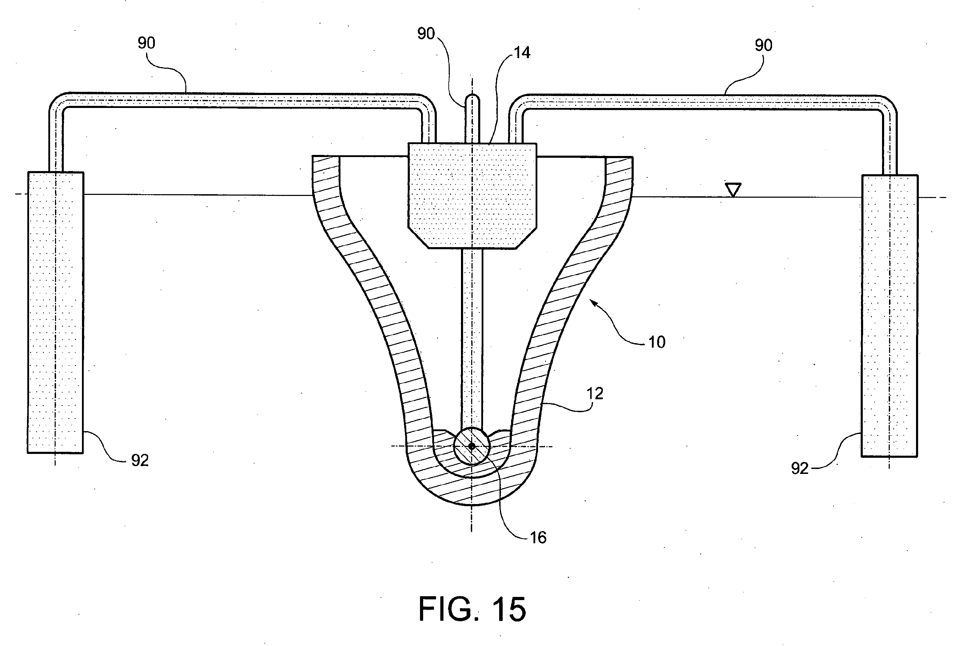

In the embodiment shown in Figure 15, the core 14 is connected to a plurality of floats 92 (in the number of four, in the proposed example) by means of a corresponding plurality of connecting arms 90 extending about the half-shell 12, without passing therethrough. Therefore, in this case also there is no need of through openings, and of associated sealing gaskets, in the half-shell 12.

Of course, the absence of a connection between the core and an external structure allows the device according to the embodiments of Figures 13 to 15 to exploit only the kinetic component of the total energy of the sea waves, and not also the potential component.

In the light of the description provided above, the advantages that may be achieved with the device according to the invention are apparent.

First of all, the device according to the invention allows to exploit, by converting them into an energy to be used as such, or to be used for example for the production of electric power, all the vertical and horizontal movements transmitted to the same device by the sea waves, independently of the width, frequency and intensity thereof. In other terms, the device according to the invention allows to exploit the entire dynamic spectrum of the sea waves.

Furthermore, in the embodiment in which the fulcrum is made as a ball joint, the device is capable of exploiting all the directions of the waves for extracting energy therefrom, by virtue of the oscillation decomposition system of the half-shell relative to the core.

The device according to the invention can operate in any condition of the sea, independently of the seabed depth and the tide height.

The device according to the invention can be transferred from a site to another one so as to be always used where it is more convenient.

The parts of the device according to the invention that are in contact with water are only the outer profile of the half-shell submersed in water, and hence the device does not constitute a danger for the plant or animal life in the sea.

Furthermore, the device is capable of operating also in the absence of a connection to external structures, be they fixed, constrained to the seabed or the coast, or non-fixed structures.

Naturally, the principle of the invention remaining unchanged, the embodiments and the constructional details may vary widely from those described and illustrated purely by way of non-limiting example, without thereby departing from the scope of the invention as defined in the attached claims.

For example, although the description and the drawings illustrate embodiments of the device in which only one core is provided within the half-shell, more than one core may be provided. In particular, in the case of a half-shell having an enlarged shape and a fulcrum made as a simple hinge, several cores may be provided, which are arranged aligned along a direction parallel to the axis of rotation defined by the hinge and, for example, are rigidly connected to one another. Therefore, the terms "a core" and "the core" used in the following claims are to be meant as equivalent to "at least one core" and to "the at least one core", respectively.

## Claims

1.   Device (10) for producing energy exploiting the energy of the sea waves, the device (10) being made as a floating device and comprising:

a half-shell (12), and
a core (14) received within the half-shell (12) and connected to the half-shell (12) by means of a fulcrum (16) which is located near the bottom of the half-shell (12) and is configured for make the half-shell (12) and the core (14) drivingly connected with each other in the vertical translational movement and to allow relative oscillations of the half-shell (12) with respect to the core (14) at least in a plane passing through the centre (G) of the fulcrum (16), the core (14) being stabilized to allow the half-shell (12) to oscillate relative to the core (14) as a result of the kinetic component of the total energy of the sea waves,

wherein the fulcrum (16) and the center of gravity of the device (10) are located so as to be below the metacenter of the device (10) as a result of any lateral oscillation of the half-shell (12) relative to the core (14),
wherein the device (10) further comprises first energy production means (32, 34) arranged to produce energy exploiting the alternating oscillatory movement of the half-shell (12) relative to the core (14), said first energy production means (32, 34) comprising a motion conversion mechanism (32, 34) arranged to convert the alternating oscillatory movement of the half-shell (12) relative to the core (14) into a unidirectional rotary movement of a rotating output member (56),
**characterized in that** the motion conversion mechanism (32, 34) comprises a first sub-mechanism (32) arranged to convert the alternating oscillatory movement of the half-shell (12) relative to the core (14) into an alternating rotary movement of at least one rotating input member (54a, 54b) and a second sub-mechanism (34) arranged to convert the alternating rotary movement of said at least one rotating input member (54a, 54b) into a unidirectional rotary movement of the rotating output member (56).

2.   Device according to claim 1, wherein the fulcrum (16) is made as a ball joint, so that the half-shell (12) is capable of oscillating relative to the core (14) about the centre (G) in any plane passing through this point.

3.   Device according to claim 2, wherein said first sub-mechanism (32) is arranged to decompose the alternating oscillatory movement of the half-shell (12) relative to the core (14) into two components perpendicular to each other and to convert each of the two perpendicular components of the alternating oscillatory movement of the half-shell (12) relative to the core (14) into an alternating rotary movement of at least one respective rotating input member (54a, 54b), and said second sub-mechanism (34) is arranged to convert, for each of the two perpendicular components of the alternating oscillatory movement of the half-shell (12) relative to the core (14), the alternating rotary movement of said at least one rotating input member (54a, 54b) into a unidirectional rotary movement of the rotating output member (56).

4.   Device according to claim 3, wherein said first sub-mechanism (32) comprises a pair of first guides (36), which are secured to the half-shell (12) and extend along respective arcs of circumference defined by the intersection of a sphere having its centre coinciding with the centre (G) of the fulcrum (16) and of a first pair of parallel planes placed at the same distance from a first vertical plane passing through the centre (G) of the fulcrum (16), and a pair of second guides (38), which are secured to the half-shell (12) and extend along respective arcs of circumference defined by the intersection of said sphere with a second pair of parallel planes which are placed at the same distance from a second vertical plane passing through the centre (G) of the fulcrum (16) and perpendicular to said first plane, wherein said first sub-mechanism (32) further comprises at least one first (40) and at least one second (42) guided elements, each having a curvilinear axis in the shape of an arc of circumference having its centre coinciding with the centre (G) of the fulcrum (16) and its radius substantially equal to that of said sphere, said at least one first guided element (40) being guided along said first guides (36) and extending parallel to said second guides (38) and said at least one second guided element (42) being guided along said second guides (38) and extending parallel to said first guides (36), and wherein said first sub-mechanism (32) further comprises at least one first support (48) along which said at least one first guided element (40) is slidably guided and at least one second support (50) along which said at least one second guided element (42) is slidably guided, said at least one first and at least one second supports (48, 50) being secured to the core (14) in such a manner that the curvilinear direction along which said at least one first and at least one second guided elements (40, 42) slide is fixed relative to the core (14).

5. Device according to claim 3, wherein said first sub-mechanism (32) comprises a first frame (64), supported for rotation by the half-shell (12) about a first axis (x) passing through the centre (G) of the fulcrum (16), and a second frame (66), which is supported for rotation by the first frame (64) so as to be able to rotate relative to this latter about a second axis (y) perpendicular to the first axis (x) and passing through the centre (G) of the fulcrum (16), and which is connected to the core (14) so as to be drivingly connected therewith for translation along a third axis (z) passing through the centre (G) of the fulcrum (16) and perpendicular to the plane defined by the first axis (x) and by the second axis (y), and wherein the first axis (x) is constrained to the half-shell (12) and the third axis (z) is constrained to the core (14).

6. Device according to claim 1, wherein the fulcrum (16) is made as a hinge defining only one axis of rotation, so that the half-shell (12) is capable of oscillating relative to the core (14) about the centre (G) only in a plane perpendicular to the axis of rotation of the fulcrum (16).

7. Device according to claim 6, wherein said first sub-mechanism (32) comprises at least one guided element (40), which is secured to the half-shell (12) and has a curvilinear axis in the shape of an arc of circumference extending in a plane perpendicular to the axis of rotation of the fulcrum (16) and having its centre on said axis of rotation, and at least one first support (48) which is secured to the core (14) and along which said at least one guided element (40) is slidably guided, and wherein the said at least one guided element (40) is provided with one or more toothed arcs for converting its own alternating oscillatory movement into an alternating rotary movement of said at least one rotating input member (54a, 54b).

8. Device according to claim 6, wherein said first sub-mechanism (32) comprises a frame (64) which is drivingly connected with the core (14) and is supported for rotation by the half-shell (12) about the axis of rotation of the fulcrum (16).

9. Device according to any of the preceding claims, wherein the half-shell (12) has an axial-symmetric configuration relative to an axis of symmetry (s) passing through the centre (G) of the fulcrum (16).

10. Device according to any of claims 1 to 8, wherein the half-shell (12) has an elongated shape along a given direction, as seen in section in a plane perpendicular to the vertical axis (z) passing through the centre (G) of the fulcrum (16).

11. Device according to any of the preceding claims, wherein the core (14) is connected to a counterweight (86) placed underneath the device (10) by means of connecting arms (90) extending about the half-shell (12).

12. Device according to any of the preceding claims, wherein the core (14) is connected to a plurality of floats (92) by means of a corresponding plurality of connecting arms (90) extending about the half-shell (12).

13. Device according to any of claims 1 to 10, wherein the core (14) is mechanically connected to an external structure (10, 100).

14. System (10, 100) for producing energy exploiting the energy of the sea waves, comprising a device (10) according to any of the preceding claims, a fixed or non-fixed external structure (10, 100), at least one connecting member (28) for the connection of the device (10) to the external structure (10, 100), and second energy production means (34, 76, 78) arranged to produce energy exploiting the alternating vertical movement of the device (10) relative to the external structure (10, 100) caused by the potential component of the total energy of the sea waves.

15. System according to claim 14, wherein the external structure (10, 100) is formed by another device (10) according to any of claims 1 to 13.

**Patentansprüche**

1. Vorrichtung (10) zur Erzeugung von Energie durch Ausnutzung der Energie der Meereswellen, wobei die Vorrichtung (10) als eine schwimmende Vorrichtung ausgebildet ist und aufweist:

   eine Halbschale (12), und
   einen Kern (14), der in der Halbschale (12) aufgenommen ist und mit der Halbschale (12) mittels einer Gelenkstelle (16) verbunden ist, die nahe dem Boden der Halbschale (12) gelegen ist und dazu ausgestaltet ist, die Halbschale (12) und den Kern (14) antriebsmäßig in der vertikalen Translationsbewegung miteinander verbunden zu gestalten und relative Schwingungen der Halbschale (12) in Bezug auf den Kern (14) mindestens in einer durch das Zentrum (G) der Gelenkstelle (16) verlaufenden Ebene zuzulassen, wobei der Kern (14) stabilisiert ist, um Oszillationen der Halbschale (12) relativ zu dem Kern (14) aufgrund der kinetischen Komponente der Gesamtenergie der Meereswellen zuzulassen, wobei die Gelenkstelle (16) und der Schwerpunkt der Vorrichtung (10) derart gelegen sind, daß sie infolge einer beliebigen seitlichen Schwingung der Halbschale (12) relativ zu dem Kern (14) unter dem Metazentrum der Vorrichtung (10) liegen,

wobei die Vorrichtung (10) ferner eine erste Energieerzeugungseinrichtung (32, 34) aufweist, die dazu angeordnet ist, Energie durch Ausnutzung der alternierenden Schwingungsbewegung der Halbschale (12) relativ zu dem Kern (14) zu erzeugen, wobei die erste Energieerzeugungseinrichtung (32, 34) einen Bewegungsumwandlungsmechanismus (32, 34) aufweist, der dazu angeordnet ist, die alternierende Schwingungsbewegung der Halbschale (12) relativ zu dem Kern (14) in eine gleichgerichtete Drehbewegung eines rotierenden Ausgangsteils (56) umzuwandeln,

**dadurch gekennzeichnet, daß** der Bewegungsumwandlungsmechanismus (32, 34) einen ersten Untermechanismus (32) aufweist, der dazu angeordnet ist, die alternierende Schwingungsbewegung der Halbschale (12) relativ zu dem Kern (14) in eine alternierende Drehbewegung mindestens eines rotierenden Eingangsteils (54a, 54b) umzuwandeln, und einen zweiten Untermechanismus (34), der dazu angeordnet ist, die alternierende Drehbewegung des mindestens einen rotierenden Eingangsteils (54a, 54b) in eine gleichgerichtete Drehbewegung des rotierenden Ausgangsteils (56) umzuwandeln.

**2.**  Vorrichtung nach Anspruch 1, wobei die Gelenkstelle (16) als ein Kugelgelenk ausgebildet ist, so daß die Halbschale (12) relativ zu dem Kern (14) um das Zentrum (G) in jeder beliebigen durch diesen Punkt verlaufenden Ebene schwingen kann.

**3.**  Vorrichtung nach Anspruch 2, wobei der erste Untermechanismus (32) dazu angeordnet ist, die alternierende Schwingungsbewegung der Halbschale (12) relativ zu dem Kern (14) in zwei zueinander orthogonale Komponenten zu zerlegen und jede der beiden zueinander orthogonalen Komponenten der alternierenden Schwingungsbewegung der Halbschale (12) relativ zu dem Kern (14) in eine alternierende Drehbewegung mindestens eines jeweiligen rotierenden Eingangsteils (54a, 54b) umzuwandeln, und der zweite Untermechanismus (34) dazu angeordnet ist, für jede der beiden zueinander orthogonalen Komponenten der alternierenden Schwingungsbewegung der Halbschale (12) relativ zu dem Kern (14) die alternierende Drehbewegung des mindestens einen rotierenden Eingangsteils (54a, 54b) in eine gleichgerichtete Drehbewegung des rotierenden Ausgangsteils (56) umzuwandeln.

**4.**  Vorrichtung nach Anspruch 3, wobei der erste Untermechanismus (32) ein Paar von ersten Führungen (36) aufweist, die an der Halbschale (12) befestigt sind und sich jeweils längs Umfangsbögen erstrecken, die durch den Schnitt einer Kugel, deren Mittelpunkt mit dem Zentrum (G) der Gelenkstelle (16) zusammenfällt, und eines ersten Paars paralleler Ebenen, die unter dem gleichen Abstand von einer durch das Zentrum (G) der Gelenkstelle (16) verlaufenden ersten Vertikalebene angeordnet sind, definiert sind, und ein Paar von zweiten Führungen (38), die an der Halbschale (12) befestigt sind und sich jeweils längs Umfangsbögen erstrecken, die durch den Schnitt dieser Kugel mit einem zweiten Paar paralleler Ebenen, die unter dem gleichen Abstand von einer durch das Zentrum (G) der Gelenkstelle (16) verlaufenden und zu der ersten Ebene orthogonalen zweiten Vertikalebene angeordnet sind, definiert sind, wobei der erste Untermechanismus (32) ferner mindestens ein erstes (40) und mindestens ein zweites (42) geführtes Element aufweist, deren jedes eine krummlinige Achse in der Form eines Umfangsbogens aufweist, dessen Zentrum mit dem Zentrum (G) der Gelenkstelle (16) zusammenfällt und dessen Radius im Wesentlichen gleich dem der Kugel ist, wobei das mindestens eine erste geführte Element (40) längs der ersten Führungen (36) geführt ist und sich parallel zu den zweiten Führungen (38) erstreckt und das mindestens eine zweite geführte Element (42) längs den zweiten Führungen (38) geführt ist und sich parallel zu den ersten Führungen (36) erstreckt, und wobei der erste Untermechanismus (32) ferner mindestens eine erste Stütze (48) aufweist, längs der das mindestens eine erste geführte Element (40) gleitend geführt ist, und mindestens eine zweite Stütze (50), längs der das mindestens eine zweite geführte Element (42) gleitend geführt ist, wobei die mindestens eine erste und die mindestens eine zweite Stütze (48, 50) an dem Kern (14) derart befestigt sind, daß die krummlinige Richtung, längs der das mindestens eine erste und das mindestens eine zweite geführte Element (40, 42) gleiten, relativ zu dem Kern (14) feststehend ist.

**5.**  Vorrichtung nach Anspruch 3, wobei der erste Untermechanismus (32) einen ersten Rahmen (64) aufweist, der zur Drehung durch die Halbschale (12) um eine durch das Zentrum (G) der Gelenkstelle (16) verlaufende erste Achse (x) gelagert ist, und einen zweiten Rahmen (66), der zur Drehung durch den ersten Rahmen (64) derart gelagert ist, daß er relativ zu Letzterem um eine zu der ersten Achse (x) orthogonale und durch das Zentrum (G) der Gelenkstelle (16) verlaufende zweite Achse (y) drehbar ist, und der mit dem Kern (14) derart verbunden ist, daß er damit antriebsmäßig zur Translation längs einer durch das Zentrum (G) der Gelenkstelle (16) verlaufenden und zu der von der ersten Achse (x) und der zweiten Achse (y) aufgespannten Ebene orthogonalen dritten Achse (z) verbunden ist, und wobei die erste Achse (x) an die Halbschale (12) und die dritte Achse (z) an den Kern (14) gebunden ist.

6. Vorrichtung nach Anspruch 1, wobei die Gelenkstelle (16) als ein nur eine einzige Drehachse bestimmendes Scharnier ausgebildet ist, so daß die Halbschale (12) nur in einer zur Drehachse der Gelenkstelle (16) orthogonalen Ebene relativ zu dem Kern (14) um das Zentrum (G) schwingen kann.

7. Vorrichtung nach Anspruch 6, wobei der erste Untermechanismus (32) mindestens ein geführtes Element (40) aufweist, das an der Halbschale (12) befestigt ist und eine krummlinige Achse in der Form eines sich in einer zu der Drehachse der Gelenkstelle (16) orthogonalen Ebene erstreckenden Umfangsbogens, dessen Zentrum auf der Drehachse liegt, aufweist, und mindestens eine erste Stütze (48), die an dem Kern (14) befestigt ist und längs derer das mindestens eine geführte Element (40) gleitend geführt ist, und wobei das mindestens eine geführte Element (40) mit einem oder mehreren Zahnbögen zur Umwandlung seiner eigenen alternierenden Schwingungsbewegung in eine alternierende Drehbewegung des mindestens einen rotierenden Eingangsteils (54a, 54b) versehen ist.

8. Vorrichtung nach Anspruch 6, wobei der erste Untermechanismus (32) einen Rahmen (64) aufweist, der mit dem Kern (14) antriebsmäßig verbunden und zur Drehung durch die Halbschale (12) um die Drehachse der Gelenkstelle (16) gelagert ist.

9. Vorrichtung nach einem der vorhergehenden Ansprüche, wobei die Halbschale (12) eine axialsymmetrische Gestalt in Bezug auf eine durch das Zentrum (G) der Gelenkstelle (16) verlaufende Symmetrieachse (s) aufweist.

10. Vorrichtung nach einem der Ansprüche 1 bis 8, wobei die Halbschale (12), gesehen in einem Schnitt in einer zu der durch das Zentrum (G) der Hebelstelle (16) verlaufenden Vertikalachse (z) orthogonalen Ebene, längs einer gegebenen Richtung eine langgestreckte Form aufweist.

11. Vorrichtung nach einem der vorhergehenden Ansprüche, wobei der Kern (14) mit einem Gegengewicht (86) verbunden ist, das mittels sich um die Halbschale (12) herum erstreckenden Verbindungsarmen (90) unterhalb der Vorrichtung (10) angeordnet ist.

12. Vorrichtung nach einem der vorhergehenden Ansprüche, wobei der Kern (14) mit einer Anzahl von Schwimmkörpern (92) mittels einer entsprechenden Anzahl von sich um die Halbschale (12) herum erstreckenden Verbindungsarmen (90) verbunden ist.

13. Vorrichtung nach einem der Ansprüche 1 bis 10, wobei der Kern (14) mit einer äußeren Struktur (10, 100) mechanisch verbunden ist.

14. System (10, 100) zur Energieerzeugung durch Ausnützung der Energie der Meereswellen mit einer Vorrichtung (10) gemäß einem der vorhergehenden Ansprüche, einer feststehenden oder nicht feststehenden äußeren Struktur (10, 100), mindestens einem Verbindungsglied (28) zur Verbindung der Vorrichtung (10) mit der äußeren Struktur (10, 100) und einer zweiten Energieerzeugungseinrichtung (34, 76, 78), die dazu angeordnet ist, Energie durch Ausnützung der durch die Potentialkomponente der Gesamtenergie der Meereswellen bedingten alternierenden Vertikalbewegung der Vorrichtung (10) relativ zu der äußeren Struktur (10, 100) zu erzeugen.

15. System nach Anspruch 14, wobei die äußere Struktur (10, 100) durch eine andere Vorrichtung (10) nach einem der Ansprüche 1 bis 13 gebildet ist.

**Revendications**

1. Dispositif (10) destiné à produire de l'énergie en exploitant l'énergie des vagues de la mer, lequel dispositif (10) est réalisé sous la forme d'un dispositif flottant et comprenant :

   une demi-coque (12) et
   une structure centrale (14) logée dans la demi-coque (12) et reliée à la demi-coque (12) au moyen d'un bras de levier (16) qui se trouve près du fond de la demi-coque (12) et qui est configuré pour que la demi-coque (12) et la structure centrale (14) soient reliées l'une à l'autre en réalisant un entraînement dans un mouvement de translation verticale et pour permettre des oscillations relatives de la demi-coque (12) par rapport à la structure centrale (14) au moins dans un plan passant par le centre (G) du bras de levier (16), la structure centrale (14) étant stabilisée afin de permettre à la demi-coque (12) d'osciller par rapport à la structure centrale (14) sous l'effet de la composante cinétique de l'énergie totale des vagues de la mer,

dans lequel le bras de levier (16) et le centre de gravité du dispositif (10) sont situés de façon à se trouver en dessous du métacentre du dispositif (10) du fait de l'oscillation latérale éventuelle de la demi-coque (12) par rapport à la structure centrale (14),

dans lequel le dispositif (10) comprend en outre des premiers moyens de production d'énergie (32, 34) conçus pour produire de l'énergie en exploitant le mouvement oscillatoire alternatif de la demi-coque (12) par rapport à la structure centrale (14),

lesdits premiers moyens de production d'énergie (32, 34) comprenant un mécanisme de conversion du mouvement (32, 34) conçu pour convertir le mouvement oscillatoire alternatif de la demi-coque (12) par rapport à la structure centrale (14) en un mouvement de rotation unidirectionnel d'un élément de sortie rotatif (56),

**caractérisé en ce que** le mécanisme de conversion de mouvement (32, 34) comprend un premier sous-ensemble de mécanisme (32) disposé pour convertir le mouvement oscillatoire alternatif de la demi-coque (12) par rapport à la structure centrale (14) en un mouvement de rotation alternatif d'au moins un élément d'entrée rotatif (54a, 54b) et un deuxième sous-ensemble de mécanisme (34) conçu pour convertir le mouvement de rotation alternatif dudit au moins un élément d'entrée rotatif (54a, 54b) en un mouvement de rotation unidirectionnel de l'élément de sortie rotatif (56).

2. Dispositif selon la revendication 1, dans lequel le bras de levier (16) est réalisé comme une articulation à rotule, de sorte que la demi-coque (12) peut osciller par rapport à la structure centrale (14) autour du centre (G) dans n'importe quel plan passant par ce point.

3. Dispositif selon la revendication 2, dans lequel ledit premier sous-ensemble de mécanisme (32) est conçu pour décomposer le mouvement oscillatoire alternatif de la demi-coque (12) par rapport à la structure centrale (14) en deux composantes perpendiculaires l'une à l'autre et convertir chacune des deux composantes perpendiculaires du mouvement oscillatoire alternatif de la demi-coque (12) par rapport à la structure centrale (14) en un mouvement de rotation alternatif de l'au moins un élément d'entrée rotatif (54a, 54b) correspondant, et ledit deuxième sous-ensemble de mécanisme (34) est conçu pour convertir, pour chacune des deux composantes perpendiculaires du mouvement oscillatoire alternatif de la demi-coque (12) par rapport à la structure centrale (14), le mouvement de rotation alternatif dudit au moins un élément d'entrée rotatif (54a, 54b) en un mouvement de rotation unidirectionnel de l'élément de sortie rotatif (56).

4. Dispositif selon la revendication 3, dans lequel ledit premier sous-ensemble de mécanisme (32) comprend une paire de premiers guides (36) qui sont fixés à la demi-coque (12) et s'étendent le long d'arcs respectifs de circonférence définis par l'intersection d'une sphère dont le centre coïncide avec le centre (G) du bras de levier (16) et une première paire de plans parallèles situés à la même distance d'un premier plan vertical passant par le centre (G) du bras de levier (16), et une paire de deuxièmes guides (38) qui sont fixés à la demi-coque (12) et s'étendent le long d'arcs respectifs de circonférence définis par l'intersection de ladite sphère avec une deuxième paire de plans parallèles qui sont placés à la même distance d'un deuxième plan vertical passant par le centre (G) du bras de levier (16) et perpendiculaires audit premier plan, ledit premier sous-ensemble de mécanisme (32) comprenant en outre au moins un premier élément guidé (40) et au moins un deuxième (42) dont chacun a un axe incurvé sous la forme d'un arc de circonférence dont le centre coïncide avec le centre (G) du bras de levier (16) et dont le rayon est sensiblement égal à celui de ladite sphère, ledit au moins un premier élément guidé (40) étant guidé le long desdits premiers guides (36) et s'étendant parallèlement auxdits deuxièmes guides (38) et ledit au moins un deuxième élément guidé (42) étant guidé le long desdits deuxièmes guides (38) et s'étendant parallèlement auxdits premiers guides (36), et dans lequel ledit premier sous-ensemble de mécanisme (32) comprend en outre au moins un premier support (48) le long duquel ledit au moins un premier élément guidé (40) est guidé de façon coulissante et au moins un deuxième support (50) le long duquel ledit au moins un deuxième élément guidé (42) est guidé de façon coulissante, lesdits au moins un premier et au moins un deuxième supports (48, 50) étant fixés à la structure centrale (14) de telle manière que la direction incurvée le long de laquelle lesdits au moins un premier et au moins un deuxième éléments guidés (40, 42) coulissent soit fixe par rapport à la structure centrale (14).

5. Dispositif selon la revendication 3, dans lequel ledit premier sous-ensemble de mécanisme (32) comprend un premier cadre (64) supporté par la demi-coque (12) avec possibilité de rotation autour d'un premier axe (x) passant par le centre (G) du bras de levier (16), et un deuxième cadre (66) qui est supporté avec possibilité de rotation par le premier cadre (64) de façon à pouvoir tourner par rapport à celui-ci autour d'un deuxième axe (y) perpendiculaire au premier axe (x) et passant par le centre (G) du bras de levier (16), et qui est relié à la structure centrale (14) de façon à être relié avec celle-ci en vue d'un entraînement en translation le long d'un troisième axe (z) passant par le centre (G) du bras de levier (16) et perpendiculaire au plan défini par le premier axe (x) et par le deuxième axe (y), et dans lequel le premier axe (x) est contraint vers la demi-coque (12) et le troisième axe (z) est contraint vers la structure centrale (14).

6. Dispositif selon la revendication 1, dans lequel le bras de levier (16) est réalisé comme une charnière définissant un seul axe de rotation, de sorte que la demi-coque (12) n'est capable d'osciller par rapport à la structure centrale (14) autour du centre (G) que dans un plan perpendiculaire à l'axe de rotation du bras de levier (16).

7. Dispositif selon la revendication 6, dans lequel ledit premier sous-ensemble de mécanisme (32) comprend au moins un élément guidé (40), qui est fixé à la demi-coque (12) et possède un axe curviligne formant un arc de circonférence qui s'étend dans un plan perpendiculaire à l'axe de rotation du bras de levier (16) et dont le centre se trouve sur ledit axe de rotation, et au moins un premier support (48) qui est fixé à la structure centrale (14) et le long duquel ledit au moins un élément guidé (40) est guidé de façon coulissante, et dans lequel ledit au moins un élément guidé (40) est muni d'un ou plusieurs arcs dentés pour convertir son propre mouvement oscillatoire alternatif en un mouvement de rotation alternatif dudit au moins un élément d'entrée rotatif (54a, 54b).

8. Dispositif selon la revendication 6, dans lequel ledit premier sous-ensemble de mécanisme (32) comprend un cadre (64) qui est relié en vue d'un entraînement avec la structure centrale (14) et qui est supporté par la demi-coque (12) avec possibilité de rotation autour de l'axe de rotation du bras de levier (16).

9. Dispositif selon l'une quelconque des revendications précédentes, dans lequel la demi-coque (12) a une configuration symétrique dans le sens axial par rapport à un axe de symétrie (s) passant par le centre (G) du bras de levier (16).

10. Dispositif selon l'une quelconque des revendications 1 à 8, dans lequel la demi-coque (12) a une forme allongée dans un sens donné, vue en coupe dans un plan perpendiculaire à l'axe vertical (z) passant par le centre (G) du bras de levier (16).

11. Dispositif selon l'une quelconque des revendications précédentes, dans lequel la structure centrale (14) est reliée à un contrepoids (86) placé en dessous du dispositif (10) au moyen de bras de liaison (90) qui s'étendent autour de la demi-coque (12).

12. Dispositif selon l'une quelconque des revendications précédentes, dans lequel la structure centrale (14) est reliée à plusieurs flotteurs (92) au moyen d'un nombre correspondant de bras de liaison (90) qui s'étendent autour de la demi-coque (12).

13. Dispositif selon l'une quelconque des revendications 1 à 10, dans lequel la structure centrale (14) est reliée mécaniquement à une structure externe (10, 100).

14. Système (10, 100) pour la production d'énergie exploitant l'énergie des vagues de la mer, comprenant un dispositif (10) selon l'une quelconque des revendications précédentes, une structure externe fixe ou non fixe (10, 100), au moins un élément de liaison (28) pour relier le dispositif (10) à la structure externe (10, 100) et des deuxièmes moyens de production d'énergie (34, 76, 78) disposés en vue de produire de l'énergie en exploitant le mouvement vertical alternatif du dispositif (10) par rapport à la structure externe (10, 100) causé par la composante potentielle de l'énergie totale des vagues de la mer.

15. Système selon la revendication 14, dans lequel la structure externe (10, 100) est formée par un autre dispositif (10) selon l'une quelconque des revendications 1 à 13.

FIG. 1

EP 2 664 788 B1

FIG. 2

FIG. 3a

FIG. 3b

FIG. 3c

EP 2 664 788 B1

FIG. 4

FIG. 5

**FIG. 6**

FIG. 7

FIG. 8

FIG. 9

EP 2 664 788 B1

FIG. 10

FIG. 11a

FIG. 11b

**FIG. 12**

FIG. 13

FIG. 14

FIG. 15

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- FR 2541730 A1
- US 2009313988 A1
- DE 202010007476 U1
- US 3204110 A
- DE 102009006702 A1
- US 20090313988 A